(19) Europäisches Patentamt
European Patent Office
Office européen des brevets

(11) **EP 4 417 735 B1**

(12) **EUROPÄISCHE PATENTSCHRIFT**

(45) Veröffentlichungstag und Bekanntmachung des Hinweises auf die Patenterteilung:
**01.04.2026  Patentblatt 2026/14**

(21) Anmeldenummer: **23156686.0**

(22) Anmeldetag: **15.02.2023**

(51) Internationale Patentklassifikation (IPC):
*C25B 1/16* (2006.01)  *C01D 15/02* (2006.01)
*C02F 1/469* (2023.01)  *B01D 61/42* (2006.01)
*B01D 69/02* (2006.01)  *B01D 69/06* (2006.01)
*B01D 71/02* (2006.01)  *B01D 71/26* (2006.01)
*B01D 71/34* (2006.01)  *B01D 71/36* (2006.01)
*C22B 26/12* (2006.01)  *C25B 9/13* (2021.01)
*C25B 9/21* (2021.01)  *C22B 7/00* (2006.01)
*C25B 13/07* (2021.01)  *C25B 15/00* (2006.01)
*C02F 101/10* (2006.01)  *C02F 103/08* (2006.01)
*C02F 103/16* (2006.01)

(52) Gemeinsame Patentklassifikation (CPC):
**C02F 1/4693; B01D 69/02; C01D 15/02;
C22B 7/006; C22B 26/12; C25B 1/16; C25B 9/21;
C25B 13/07; C25B 15/00;** B01D 61/422;
B01D 71/024; B01D 2313/345; B01D 2325/42;
C02F 2101/10; C02F 2103/08;           (Forts.)

(54) **BETRIEB EINER ELEKTROCHEMISCHEN ZELLE IM KONTEXT DER AUFARBEITUNG LITHIUMHALTIGER WÄSSER**

OPERATION OF AN ELECTROCHEMICAL CELL IN THE CONTEXT OF REPROCESSING LITHIUM-CONTAINING WATERS

FONCTIONNEMENT D'UNE CELLULE ÉLECTROCHIMIQUE DANS LE CONTEXTE DE TRAITEMENT D'EAUX CONTENANT DU LITHIUM

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**21.08.2024  Patentblatt 2024/34**

(73) Patentinhaber: **Evonik Operations GmbH
45128 Essen (DE)**

(72) Erfinder:
• **HYING, Christian
   46414 Rhede (DE)**
• **GORMAN, Elisabeth
   45721 Haltern am See (DE)**
• **DAHLHUES, Meike
   45772 Marl (DE)**
• **DECKER, Nicole
   44803 Bochum (DE)**
• **STENNER, Patrik
   63452 Hanau (DE)**
• **STADTMÜLLER, Tobias
   63500 Seligenstadt (DE)**
• **ARNDT, Sebastian
   65462 Ginsheim Gustavsburg (DE)**

(74) Vertreter: **Evonik Patent Association
c/o Evonik Industries AG
IP Management
Postcode 84/339
Rodenbacher Chaussee 4
63457 Hanau (DE)**

(56) Entgegenhaltungen:
**WO-A1-2022/157624      CA-A1- 3 077 834
US-A1- 2012 103 826**

• LI ZHEN ET AL: "Continuous electrical pumping membrane process for seawater lithium mining", ENERGY & ENVIRONMENTAL SCIENCE, vol. 14, no. 5, 19 May 2021 (2021-05-19), Cambridge, pages 3152 - 3159, XP055961981, ISSN: 1754-5692, Retrieved from the Internet <URL:https://pubs.rsc.org/en/content/articlepdf/2021/ee/d1ee00354b> DOI: 10.1039/D1EE00354B

(52) Gemeinsame Patentklassifikation (CPC): (Forts.)
C02F 2103/16

**Beschreibung**

Die Erfindung befasst sich mit dem Betrieb einer elektrochemischen Zelle zwecks Aufarbeitung lithiumhaltiger Wässer.

Lithiumhaltige Wässer sind Gemische enthaltend überwiegend Wasser und darin gelöst Lithiumverbindungen. Zudem können weitere gelöste Stoffe darin enthalten sein, etwa Sulfate, Hydrogensulfate, Carbonate, Hydrogencarbonate, Hydroxide, Chloride oder Fluoride der folgenden Elemente: B, Na, Mg, Al, Si, K, Ca, Mn, Fe, Co, Ni, Cu. Lithiumhaltige Wässer können zudem auch organische Verbindungen enthalten.

Lithiumhaltige Wässer kommen entweder natürlich vor, etwa als Li-Sole in Salzseen, als Meerwasser oder als Grundwasser. Darüber hinaus fallen lithiumhaltige Wässer in Tiefbohrungen oder als Grubenwasser an. Schließlich entstehen auch beim Recycling verbrauchter Lithium-Ionen-Batterien (LIB) sowie in der Produktion von neuen LIB lithiumhaltige Wässer. So unterschiedlich die Herkunft der lithiumhaltigen Wässer, so unterschiedlich ist auch ihre Zusammensetzung: Nicht nur die Li-Konzentration kann stark variieren, sondern auch die Menge und Art der weiteren gelösten Stoffen.

Lithiumhaltige Wässer dienen als Ausgangstoff für die Gewinnung von lithiumhaltigen Verbindungen, wie insbesondere von Lithiumcarbonat ($Li_2CO_3$) oder Lithiumhydroxid (LiOH). Beides wird für die Produktion von LIB benötigt. Aufgrund der stark steigenden Nachfrage nach neuen LIB und des zunehmenden Anfalls verbrauchter LIB wurden zahlreiche Verfahren zur Aufarbeitung lithiumhaltiger Wässer entwickelt, die meist darauf abziehen, Lithiumcarbonat ($Li_2CO_3$) oder Lithiumhydroxid (LiOH) mit möglichst großer Reinheit zu gewinnen. Die Verfahren wurden einerseits optimiert auf die gewünschte Zielverbindung und andererseits auf die Zusammensetzung des genutzten lithiumhaltigen Wassers. Eine Übersicht bieten:
Wietelmann, U. and Steinbild, M. (2014). Lithium and Lithium Compounds. In Ullmann's Encyclopedia of Industrial Chemistry, (Ed.). DOI: 10.1002/14356007.a15_393.pub2.

Kommerziell vorherrschend, insbesondere bei der Gewinnung von Primärlithium aus Salzseen, sind solche Aufbereitungsverfahren, die vorwiegend thermisch oder mit Kristallisationseffekten arbeiten. Das ist in vielerlei Hinsicht sehr ressourcenbelastend.

Deswegen wurden inzwischen neuere Verfahren zur Gewinnung von Lithiumverbindungen aus lithiumhaltigen Wässern entwickelt, die mit elektrischer Energie arbeiten. Es handelt sich dabei um elektrochemische Verfahren, insbesondere um Elektrolyse oder um Elektromembrandialyse. Prinzipieller Vorteil dieser elektrochemischen Verfahren ist, dass sie bei Verwendung von grünem Strom sehr ressourcenschonend sind. Nachteil ist die aufwändige Apparatetechnik, insbesondere die elektrochemischen Zellen, in denen die Aufarbeitung erfolgt, sind materialwissenschaftlich sehr anspruchsvoll.

Eine Auswahl von elektrochemischen Verfahren zur Abtrennung von Lithium aus Wässern aus dem Recycling von Altbatterien oder Meerwasser haben zusammengestellt:
Pankaj K. Choubey et al.: Advance review on the exploitation of the prominent energystorage element Lithium. Part II: From sea water and spent lithium ion batteries (LIBs), Minerals Engineering, Volume 110, 2017, Pages 104-121, DOI: 10.1016/j.mineng.2017.04.008.

In Abschnitt 2.2 beschreiben Choubey et al moderne elektrodialytische Verfahren, welche in einer elektrochemischen Zelle durchgeführt werden, die mit zwei unterschiedlichen ionenleitenden Membranen ausgerüstet sind, nämlich mit einer Anionen-leitenden Membran und einer Kationenleitenden Membran. Die gewünschte Ionenleitfähigkeit der Membranen wird durch Imprägnierung mit einer ionischen Flüssigkeit erzielt.

Aus der EP 2 841 623 B1 ist ein Verfahren zur Herstellung von Lithiumhydroxid mit Hilfe einer elektrochemischen Zelle bekannt, die drei Kompartimente und zwei Separatoren aufweist (eine so genannte Dreikammerzelle). Bei dem aus der EP 2 841 623 B1 bekannten Dreikammerverfahren wird das zentrale Kompartiment der Dreikammerzelle mit einem wässrigen Strom enthaltend Lithiumsulfat beaufschlagt. In dem kathodischen Kompartment wird Lithiumhydroxid vorgelegt, währenddessen Ammoniak-Wasser in das anodische Kompartiment eingespeist wird. Aus dem kathodischen Kompartiment der Zelle wird eine wässrige Lösung enthaltend Lithiumhydroxid abgezogen, in dem anodischen Kompartiment wird Ammoniumsulfat gebildet. Zudem entstehen auf der anodischen Seite Sauerstoff und an der Kathode Wasserstoff. Die Dreikammerzelle wird unter basischen Bedingungen betrieben.

Die aus EP 2 841 623 B1 bekannte Dreikammerzelle weist prinzipbedingt zwei Membranen auf, welche das zentrale Kompartiment des anodischen Kompartiments bzw. dem kathodischen Kompartiment separieren. Als Membranwerkstoff werden unter anderem perfluorierte Polymere, Styrol- oder Divinylbenzol-Membranen angesehen. Insbesondere sollen Kationenaustauschmembranen verwendet werden oder PEEK-verstärkte Membranen. Als Beispiele werden die kommerziellen Ionenaustauschmembranen Asahi AAV, Fumatech FAB, Astrom Neosepta® oder Lanxess Ionac® genannt. Die chemische Natur dieser Ionenaustauschmembranen ist in aus EP 2 841 623 B1 nicht offengelegt, aber es ist überwiegend wahrscheinlich, dass es sich dabei um organische Membranmaterialien handelt.

Ein prinzipieller Nachteil von Polymermembranen ist ihre Wasserdurchlässigkeit. Dadurch wird der Anolyt mit Wasser aus dem Katholyt verdünnt. Außerdem lassen organische Ionenaustauschmembranen nicht nur $Li^+$, sondern auch $Na^+$ passieren, sodass die Stoffreinheit des Zielproduktes beeinträchtigt wird, sobald sich im Ausgangsmaterial auch Na befindet. Neben der Reinheit des Zielprodukts leidet auch die Stromausbeute des Prozesses: Die wertvolle elektrische Energie wird bei der Elektrolyse mit organischen Membranen auch dafür verbraucht, unerwünschtes $Na^+$ in das zweite Kompartiment zu transportieren. Im zweiten Kompartiment angekommen wird das $Na^+$ zudem über unbeabsichtigte elektrochemische Prozesse in unerwünschte Nebenprodukte umgesetzt. Bezogen auf die Ausbeute an dem Zielprodukt Li ist die Energieeffizienz des Prozesses eingeschränkt. Schließlich sind diese Membranen empfindlich gegen die Anwesenheit von zweiwertigen Kationen wie bspw. $Mg^{2+}$ und $Ca^{2+}$. Diese Kationen vergiften die Membran mit der Zeit, sodass ihre Leitfähigkeit für Lithium reduziert wird: Dies äußert sich dadurch, dass die Permeanz der Membran, also ihre flächenbezogene Li-Leitfähigkeit bezogen auf ihre Stärke, abnimmt. Dies bedeutet, dass weniger Lithium aus dem lithiumhaltigen Wasser abgeschieden werden kann. Durch Reduktion von Stromeffizienz, steigender Verunreinigung des Zielprodukts mit Fremdkationen und sinkender Permeanz wird der Betrieb der elektrochemischen Zelle rasch unwirtschaftlich.

Die WO2022/157624 A1 beschreibt ein Verfahren zum Betrieb einer elektrochemischen Zelle mit drei Kompartimenten worin der pH-Wert des Zentral-Elektrolyts unter 7 liegt.

In Hinblick auf diesen Stand der Technik liegt der vorliegenden Erfindung die Aufgabe zu Grunde, die elektrochemische Zelle mit besserer Stromausbeute zu betreiben, die Permeanz zeitlich konstant zu halten und die Reinheit des Zielproduktes zu verbessern.

Gelöst wird diese Aufgabe dadurch, dass die elektrochemische Zelle wie folgt betrieben wird:

a) Es wird mindestens eine elektrochemischen Zelle bereitgestellt, welche zumindest die folgenden Merkmale aufweist:

    i) die elektrochemische Zelle umfasst eine Anode und eine Kathode;
    ii) die elektrochemische Zelle umfasst einen Kathoden-Separator und einen Anoden-Separator;
    iii) die elektrochemische Zelle umfasst ein anodisches Kompartiment, ein zentrales Kompartiment und ein kathodisches Kompartiment;
    iv) der Kathoden-Separator trennt das zentrale Kompartiment von dem kathodischen Kompartiment;
    v) der Anoden-Separator trennt das zentrale Kompartiment von dem anodischen Kompartiment;
    vi) der Kathoden-Separator enthält ein anorganisches Material, welches elektrisch isolierend ist und welches eine Leitfähigkeit für Anionen sowie eine Leitfähigkeit für Kationen besitzt, wobei die Leitfähigkeit für Kationen größer ist als die Leitfähigkeit für Anionen und wobei die Leitfähigkeit für Li-Kationen ($Li^+$) größer ist als die Leitfähigkeit für kationische Verunreinigungen ($Me^{m+}$);
    vii) der Anoden-Separator enthält ein organisches Material, welches eine Leitfähigkeit für Anionen ($X^{n-}$, $OH^-$) sowie eine Leitfähigkeit für Kationen besitzt, wobei die Leitfähigkeit für Anionen ($X^{n-}$, $OH^-$) größer ist als die Leitfähigkeit für Kationen;
    viii) das anorganische Material und/oder das organische Material ist elektrisch isolierend;

b) Es wird ein Katholyt im kathodischen Kompartiment bereitgestellt, wobei der Katholyt mindestens enthält: Wasser ($H_2O$), Li-Kationen ($Li^+$), Hydroxidionen ($OH^-$);
c) Es wird ein Zentral-Elektrolyt im zentralen Kompartiment bereit gestellt, wobei der Zentral-Elektrolyt mindestens enthält: Wasser ($H_2O$), Li-Kationen ($Li^+$), Anionen ($X^{n-}$) und kationische Verunreinigungen ($Me^{m+}$);
d) Es wird ein Anolyt im anodischen Kompartiment bereit gestellt, wobei der Anolyt mindestens enthält: Wasser ($H_2O$) und Anionen ($X^{n-}$);
e) Es wird mindesten eine elektrische Spannungsquelle bereit gestellt, welche über eine erste elektrische Leitung mit der Anode und über eine zweite elektrische Leitung mit der Kathode verbindbar ist;
f) Die elektrochemischen Zelle wird mit einer von der elektrischen Spannungsquelle bezogenen elektrischen Spannung $U$ beaufschlagt, dergestalt, dass ein elektrischer Strom $I$ zwischen Anode und Kathode fließt,

dadurch gekennzeichnet ,

dass der Zentral-Elektrolyt zusätzlich auch Hydroxidionen ($OH^-$ ) enthält, und dass der pH-Wert des Zentral-Elektrolyts zwischen 9 und 12 liegt, gemessen mit einer Glaselektrode bei einer Temperatur von 25°C,
und dass eine elektrochemische Zelle bereitgestellt wird, welche zusätzlich die folgende Merkmale aufweist:

    ix) die elektrochemische Zelle umfasst eine Hilfskathode;
    x) die Hilfskathode steht mit dem Zentral-Elektrolyt in Kontakt;
    xi) die Hilfskathode ist über die zweite elektrische Leitung mit der elektrischen Spannungsquelle verbindbar;
    xii) die Kathode weist eine Kathodenfläche $A_K$ auf;

xiii) die Hilfskathode weist eine Hilfskathodenfläche $A_{AK}$ auf;
und dass das Verfahren einen Betriebszustand aufweist, nämlich:

k) einen kombinierten Produktions- und Regenerationszustand, in dem die Anode über die erste elektrische Leitung und die Kathode und die Hilfskathode über die zweite elektrische Leitung mit der elektrischen Spannungsquelle verbunden sind und in dem Anode und Kathode und Hilfskathode mit der elektrischen Spannung U beaufschlagt werden, sodass der elektrischer Strom I zwischen Anode und Kathode und Hilfskathode fließt;
wobei die Kathodenfläche $A_K$ und die Hilfskathodenfläche $A_{AK}$ so gewählt sind, dass gilt

$$A_K > f \cdot A_A$$

mit f größer 1 oder mit f größer 10 oder mit f größer 100.

Eine Grundidee des erfindungsgemäßen Verfahrens besteht darin, einen anorganischen Kathoden-Separator zur verwenden, der eine Ionenselektivität zu Gunsten von Lithium aufweist. Dies bedeutet, dass das Material, aus dem der Kathoden-Separator hergestellt wird, eine höhere Leitfähigkeit für Li+ Kationen besitzt als für andere Kationen wie beispielsweise $Na^+$ oder andere kationische Verunreinigungen $Me^{m+}$. Dies führt dazu, dass weniger kationische Verunreinigungen in das kathodische Kompartiment gelangen und dort zu unerwünschten Nebenprodukten umgesetzt werden kann, was die Stromausbeute steigert und die Reinheit des Zielprodukts verbessert.
Als anorganisches Material, welches eine höhere Leitfähigkeit für $Li^+$ aufweist als für andere Kationen, werden vorzugsweise so genannte LiSICons verwendet. LiSICon steht für Lithium Super Ionic Conductor. Es handelt sich dabei um eine Klasse aus anorganischem, (glas)keramischen Material, welches elektrisch isoliert, aber zugleich eine intrinsische Leitfähigkeit für Li-Ionen aufweist. Der Transportmechanismus für Li ist in der Kristallstruktur des Materials begründet. Die Li-Ionen werden - vereinfacht gesprochen - durch die Kristalle "durchgereicht". Kommerziell verfügbare LiSICon-Materialien sind unter anderem Lithium-Aluminium-Titanphosphat (LATP), Lithium-Aluminium-Titan-Siliciumphosphat (LATSP), Lithium-Aluminium-Germaniumphosphat (LAGP) und Lithium-Lanthan-Titanoxid (LLTO). Diese Materialien wurden ursprünglich als Festkörper-Elektrolyt für LIB entwickelt. Eine Übersicht zu den Transportmechanismen von LiSICons, deren Kristallstruktur und Herstellung bieten:

Palakkathodi Kammampata et al.: Cruising in ceramics-discovering new structures for all-solid-state batteries-fundamentals, materials, and performances. Ionics 24, 639-660 (2018) DOI: 10.1007/s11581-017-2372-7.

Yedukondalu Meesala et al.: Recent Advancements in Li-Ion Conductors for All-Solid-State Li-Ion Batteries. ACS Energy Lett. 2017, 2, 12, 2734-2751 DOI: 10.1021/acsenergylett.7b00849.

Spezielle LiSICon Stöchiometrien werden beschrieben von:

Sofia Saffirio et al.Li1.4Al0.4Ge0.4Ti1.4(PO4)3 promising NASICON-structured glass-ceramic electrolyte for all-solid-state Li-based batteries: Unravelling the effect of diboron trioxide, Journal of the European Ceramic Society, Volume 42, Issue 3, 2022, Pages 1023-1032 DOI 10.1016/j.jeurceramsoc.2021.11.014.

Eongyu Yi et al. Materials that can replace liquid electrolytes in Li batteries: Superionic conductivities in Li1.7Al0.3Ti1.7Si0.4P2.6O12. Processing combustion synthesized nanopowders to free standing thin films. Journal of Power Sources, Volume 269, 2014, Pages 577-588, DOI 10.1016/j.jpowsour.2014.07.029.

Aufgrund ihrer selektiven Leitfähigkeit für Li-Ionen können LiSICon-Materialien als Membran zur Abtrennung von Lithium aus Li-haltigen Gemischen verwendet werden. Das Lithium muss in dem Gemisch in ionischer Form vorliegen, etwa als in Wasser gelöstes Li-Salz.
Es ist im Stand der Technik zwar grundsätzlich bekannt, LiSICon zur Abtrennung von Lithium aus wässrigen Strömen zu verwenden (z.B. aus WO 2019055730 A1) - jedoch nicht in Kombination mit einer organischen Ionenaustauschmembran in einer Dreikammerzelle.
Ein wesentlicher Aspekt des erfindungsgemäßen Verfahrens besteht darin, dass es in einer Dreikammerzelle durchgeführt wird. Während eine elektrochemische Zelle in einfachster Bauform lediglich zwei Kompartimente umfasst, die durch genau einen Separator voneinander getrennt sind, weist eine Dreikammerzelle zwei Separatoren auf, welche die Zelle drei Kompartimente aufteilen. Zur Unterscheidung der beiden Separatoren wird hier von einem Anoden-Separator und einem Kathoden-Separator die Rede. Der Anoden-Separator ist der anodenseitig angeordnet, während kathodenseitig der Kathoden-Separator eingebaut ist. Die essentiellen Bauteile einer Dreikammerzelle sind mithin eine Anode, ein Anoden-Separator, ein Kathoden-Separator und eine Kathode. Das erste, anodische Kompartiment wird zwischen Anode und anodischem Separator gebildet. Das zweite, kathodische Kompartiment wird zwischen kathodischen Separator und Kathode gebildet. Das dritte Kompartiment entsteht zentral zwischen dem anodischen Separator und kathodischem Separator und wird daher Zentral-Kompartiment genannt.

Die erfindungsgemäße, elektrochemische Zelle kann neben den genannten, basalen Funktionselementen daneben auch weitere Bestandteile enthalten, wie etwa Katalysatoren zur Beschleunigung der Wasserelektrolyse, poröse Transportschichten (engl. porous transport layer, PTL), Flussfelder ( engl. flow field, FF) zum Transport der Elektrolyten oder Abstandshalter (spacer). Darüber hinaus können die einzelnen Funktionselemente auch zu integrierten Bauteilen zusammengefasst sein, etwa zu Membran-Elektroden-Einheiten (engl. membrane electrode assamblies - MEA). Es ist auch möglich, dass mehrere elektrochemische Zellen miteinander zu einem Aggregat verschaltet sind, etwa durch Reihenschaltung oder Parallelschaltung. Im Falle der Reihenschaltung kann die Anode der einen Zelle direkt mit der Kathode der Nachbarzelle elektrisch in Kontakt stehen und umgekehrt. Direkt kontaktierte Elektroden unterschiedlicher Polarität können auch in einer Bipolarplatte zusammengefasst sein.

Neben den aufgezählten, festen Funktionselementen, umfasst die elektrochemische Zelle noch flüssigen Elektrolyt, der zum Betrieb der Zelle notwendig ist. Im vorliegenden Fall wird der in dem anodischen Kompartiment gefüllte Elektrolyt Anolyt genannt, während der im kathodischen Kompartiment enthaltene Elektrolyt Katholyt genannt wird. Der Anolyt steht mithin mit der Anode in Kontakt, währenddessen der Katholyt mit der Kathode kontaktiert ist. Der im zentralen Kompartiment enthaltene Elektrolyt wird hier Zentral-Elektrolyt genannt. Er ist durch die beiden Separatoren von den beiden Elektroden getrennt.

Der Betrieb der elektrochemischen Zelle erfolgt gemäß der Erfindung grundsätzlich wie folgt: Der Zentral-Elektrolyt dient als Feed für den Prozess, er enthält die Lithium-Kationen, die Teil des Zielprodukts sind. Der Zentral-Elektrolyt wird aus dem aufzuarbeitenden lithiumhaltigen Wasser gespeist. Die Synthese des Zielprodukts erfolgt an der Kathode. Folglich findet sich das Zielprodukt im Katholyt. Der Anolyt dient als Senke für anionische Verunreinigungen, vor denen der Kathoden-separator erfindungsgemäß geschützt wird.

Ein weiterer, wesentlicher Aspekt des erfindungsgemäßen Verfahrens besteht darin, dass zwei elektrochemische Prozesses simultan durchgeführt werden, nämlich einerseits eine membrangestützte Elektrodialyse von Ionen und andererseits eine Elektrolyse von Wasser.

Die Elektrodialyse dient einerseits dazu, die im Zentral-Elektrolyt enthaltenen Li-Kationen $Li^+$ im Katholyt anzureichern. Darüber hinaus werden die im Feed enthaltenen, anionischen Verunreinigungen $X^{n-}$ elektrodialytisch im Anolyt angereichert, um die Verunreinigungen daran zu hindern, mit dem Kathoden-Separator in Kontakt zu kommen. Auf diese Weise wird der Kathoden-Separator davor geschützt, von den anionischen Verunreinigungen $X^{n-}$ vergiftet zu werden. Um dies zu ermöglichen, ist der Anoden-Separator anionenleitfähig.

Parallel erfolgt im erfindungsgemäßen Prozess die elektrochemische Spaltung (Elektrolyse) von Wasser in Wasserstoff und Sauerstoff. Die bei der Wasserspaltung als Intermediat gebildete Hydroxidionen OH- verbinden sich im Katholyt mit den dort angereicherten Li+Kationen zu Lithiumhydroxid (LiOH) bzw. dessen Monohydrat ($LiOH \circ H_2O$), dem gewünschten Zielprodukt.

Der besondere Vorteil der erfindungsgemäßen Kombination einer Anionenaustauschmembran als Anoden-Separator mit einer anorganischen ionenselektiven LiSICon-Membran als Kathoden-Separator besteht darin, dass die Anionenaustauschmembran die LiSICon-Membran vor dem schädlichen Einfluss der im Feed enthaltenen Anionen wie Sulfat, Carbonat, Hydroxid, Chlorid, Fluorid schützt. Diese Anionen werden nämlich über die organische Anionenaustauschmembran in das anodische Kompartiment transferiert, sodass sie die LiSICon-Membran nicht schädigen können. Die Standzeit der als Kathoden-Separator eingesetzten LiSICon-Material wird dadurch deutlich verbessert; insbesondere dann, wenn der Feed viele anionische Verunreinigungen enthält. Letzteres ist gerade dann der Fall, wenn als Feed ein lithiumhaltiges Wasser verwendet wird, welches aus dem Recycling oder aus der Produktion von Lithiumionenbatterien stammt.

Das erfindungsgemäße Verfahren wird vorzugsweise kontinuierlich durchgeführt. Dies bedeutet, dass zumindest das Bereitstellen der fließfähigen Komponenten, nämlich die Elektrolyte und der elektrische Strom dauerhaft erfolgt. Das Bereitstellen der nicht fließfähigen Komponenten wie Zelle und Spannungsquelle ist ohnehin immer dauerhaft, selbst wenn diese Komponenten nur ein einziges Mal bereitgestellt werden müssen. Die einzelnen Verfahrensschritte des Betriebs erfolgen im kontinuierlichen Verfahren zeitgleich.

Das erfindungsgemäße Verfahren wird teilweise im basischen Milieu gefahren. Genauer gesagt, sollten im Zentral-Elektrolyt und im Katholyt basische Bedingungen herrschen. Die bedeutet, dass im Zentral-Elektrolyt zusätzlich noch Hydroxidionen (OH-) enthalten sind. Der pH-Wert des Zentral-Elektrolyts sollte zwischen 9 und 12 liegen, gemessen mit einer Glaselektrode bei einer Temperatur von 25°C. Lithiumhaltige Wässer, die als Zentral-Elektrolyt verwendet werden, müssen, falls sie es nicht sind, vor der Behandlung hinsichtlich ihres pH-Wertes eingestellt werden. Die Basizität des Zentral-Elektrolyts ist deshalb wichtig, da die verwendeten LiSICon-Membranmaterialien unter diesen Bedingungen die größte Stabilität aufweisen. Saure Bedingungen führen über längere Betriebszeiten zu einer Schädigung der Materialien und müssen daher vermieden werden.

Der Anolyt ist vorzugsweise stark sauer, bzw. der pH-Wert des Anolyt wird durch zumindest eine der Anodenreaktionen, die Bildung von Protonen, kontinuierlich reduziert und erreicht häufig einen pH-Wert kleiner 4, gemessen mit einer Glaselektrode bei einer Temperatur von 25°C.

Bei den im Zentral-Elektrolyt enthaltenen Anionen handelt es sich konkret um Sulfat oder um Hydrogensulfat oder um Carbonat oder um Hydrogencarbonat oder um Hydroxid oder um Chlorid oder um Fluorid. Diese Anionen finden sich regelmäßig in lithiumhaltigen Wässern und somit auch im Zentral-Elektrolyt. Dort sind eben besagte Anionen höher konzentriert als die Hydroxidionen.

Bei den ebenfalls im Zentral-Elektrolyt enthaltenen kationischen Verunreinigungen handelt es sich konkret um Kationen von folgenden Elementen: B, Na, Mg, Al, Si, K, Ca, Mn, Fe, Co, Ni, Cu, C. Diese finden sich ebenfalls häufig in lithumhaltigen Wässern. Die Alkali- und Erdalkalimetalle kommen insbesondere in lithiumhaltigen Solen natürlichen Ursprungs vor, währenddessen die Metallkationen sich insbesondere in lithiumhaltigen Wässern finden, die aus der Aufarbeitung von verbrauchten LIB oder aus Produktionsabfällen der LIB-Herstellung stammen. Solche Ströme enthalten auch oft Kohlenstoffverbindungen, die aus Klebern, Bindern, den Anodenmaterialien der LIB, aus Rußen oder der Kunststoff-Verpackungen der LIB stammen. Diese können dann kohlenstoffhaltige Säuren, oder die Kationen dieser aber auch ungeladene organische Zersetzungsprodukte aus den vorgelagerten Schritten des LIB-Recycling enthalten.

Erfindungsgemäß ist der Kathoden-Separator Lithium-selektiv, das bedeutet, er leitet Li-Kationen besser als andere Kationen. Die spezifische Li$^+$-Leitfähigkeit s des als Kathoden-Separator eingesetzte anorganische Material sollte mindestens $1*10^{-5}$ S/cm oder besser mindestens $5*10^{-5}$ S/cm oder noch besser mindestens $10*10^{-5}$ S/cm und maximal $100*10^{-5}$ S/cm betragen. Die spez. IonenLeitfähigkeit s wird per Impedanz-Spektroskopie gemessen. Der temperaturabhängige Wert ist bei 23°C zu messen. Die Impedanz-Spektroskopie geschieht wie folgt: Der Messaufbau umfasst zwei zylindrische Elektroden, zwischen denen die Probe angeordnet wird. Um einen optimalen Kontakt mit den Elektroden und reproduzierbaren Kontraktdruck sicher zu stellen, wird in Gewicht auf der Probe platziert.

Ein Potentiostat (ZAHNER-elektrik I. Zahner-Schiller GmbH & Co. KG, Kronach-Gundelsdorf, Germany) wird mit den Elektroden verbunden und über die Software Thales (ZAHNER) gesteuert. Die Messungen werden durchgeführt in einem Frequenzbereich von 1 Hz bis 4 MHz und einer Amplitude von 5mV mit Proben, die poliert wurden und auf die eine dünne, leitfähige Goldschicht aufgesputtert wurde.

Die Messergebnisse werden in Nyquist-Diagrammen dargestellt und mit der Software Analysis (ZAHNER) ausgewertet. Der elektrische Widerstand wird an dem Maximum der Kurve des Nyquist-Diagramms abgelesen. Die spezifische Ionen-Leitfähigkeit $\sigma$ [mS/cm] wird dann berechnet mit der Formel $\sigma=(h\cdot10^4)/(R\cdot\pi/4\cdot d^2)$, worin h für die Höhe der Probe in mm, R für den gemessenen elektrische Widerstand in $\Omega$ und d für den Durchmesser der Probe in mm stehen.

Besagte Li-Selektivität und -Leitfähigkeit wird von den meisten LiSICon-Materialien erreicht. Daher wird der Kathoden-Separator vorzugsweise unter Verwendung von LiSICon-Material hergestellt oder enthält ein LiSICon oder besteht sogar vollständig aus einem LiSICon.

Konkret kommen die folgenden LiSICons in Betracht:

- LATP mit der folgenden Stöchiometrie: $Li_{1+x}Al_xTi_{2-x}(PO_4)_3$ worin gilt: $0.1\leq x\leq0.3$, wobei bevorzugt gilt x=0.3.
- LATSP mit der folgenden Stöchiometrie: $Li_{1+x+y}Al_xTi_{2-x}Si_yP_{3-y}O_{12}$ worin gilt: $0.1\leq x\leq0.3$ und $0.2\leq y\leq0.4$.
- LAGTSP mit der folgenden Stöchiometrie: $Li_{1+x+y}Al_xTi_{2-x}Si_yP_{3-y}O_{12} * nGeO_2$ worin gilt: $0\leq x\leq1$ und $0\leq y\leq1$ und $0\leq n\leq1$
- LAGTP mit der folgenden Stöchiometrie: $Li_{1.4}Al_{0.4}(Ge_{1-x}Ti_x)_{1.6}(PO_4)_3$ worin gilt: $0\leq x\leq1$.
- LAGP mit der folgenden Stöchiometrie: $Li_{1+x}Al_xGe_{2-x}(PO_4)_3$ worin gilt: x=0 oder x=0.2 oder x=0.4.
- LLTO mit der folgenden Stöchiometrie: $Li_{3x}La_{(2/3)-x\square(1/3)-2x}TiO_3$ worin gilt: $0\leq x\leq0.16$.
- Dotiertes LLZO mit der folgenden Stöchiometrie: $Li_{6.4}La_3Zr_{1.4}M_{0.6}O_{12}$ wobei M ausgewählt ist aus der Gruppe bestehend aus den folgenden Elementen: Ta, Sb, Nb.
- Undotiertes LLZO mit der folgenden Stöchiometrie: $Li_7La_3Zr_2O_{12}$

LiSICons sind kommerziell erhältlich zum Beispiel das LAGP Ampcera™ von MSE Suplies®, Tuscon, USA.

Das Material, aus dem der Anoden-Separator hergestellt ist oder was dieser enthält ist ein Anionenleitfähiges organisches Material. Solche Materialien werden auch oft als Ionomer bezeichnet. Dabei handelt es sich vorzugsweise um ein Polymer, welches einen Backbone aufweist, an dem mindestens eine kationische funktionelle Gruppe gebunden ist. Bei Letzteren handelt es sich vorzugsweise um quarternisiertes Trialkyl-Ammoniumsalz. Als Backbone wird vorzugsweise Polystyrol, Polysulfon, Poly(ethersulfon) oder Poly(phenylenoxid), Polyvinylidenfluorid, oder Polytetrafluorethylen verwendet. Ganz besonders bevorzugt wird das quaternisiertes Trialkyl-Ammoniumsalz über eine Benyl(Methyl)-Gruppe an einen Backbone aus Polystyrol, Polysulfon, Poly(ethersulfon) oder Poly(phenylenoxid) angebunden. Das so erhaltene Anionen-leitfähige Polymer wird bei der Herstellung des Anoden-Separators verwendet, ist im Anoden-Separator enthalten oder der Anoden-Separator besteht vollständig aus diesem Polymer.

Derartige Polymere sind kommerziell erhältlich. Als Beispiele sind zu nennen: Fumasep FAPQ von der Firma Fumatech, Neosepta-Membranen von der Firma ASTOM, Selemion-Membranen von AGC, sowie AHA-Membran von Eurodia Industrie SAS.

Eine bevorzugte Ausführungsform der Erfindung sieht vor, dass eine elektrochemische Zelle mit einer Hilfskathode eingesetzt wird. Die Hilfskathode wird mit dem Zentral-Elektrolyt kontaktiert und über eine dritte elektrische Leitung mit der elektrischen Spannungsquelle verbunden. Der erfindungsgemäße Betrieb weist dann mindestens zwei Betriebszustände auf, nämlich:

p) einen Produktionszustand, in dem die Anode und die Kathode über die erste bzw. die zweite elektrische Leitung mit der elektrischen Spannungsquelle verbunden sind und in dem Anode und Kathode mit der elektrischen Spannung $U$ beaufschlagt werden, sodass der elektrischer Strom $I$ zwischen Anode und Kathode fließt;

r) einen Regenerationszustand, in dem die Anode und die Hilfskathode über die erste bzw. die dritte elektrische Leitung mit der elektrischen Spannungsquelle verbunden sind, und in dem Anode und Hilfskathode mit der elektrischen Spannung $U$ beaufschlagt werden, sodass der elektrischer Strom $I$ zwischen Anode und Hilfskathode fließt.

Im Produktionszustand wird das Li aus dem Zentral-Elektrolyt abgetrennt und das LiOH gebildet, im Regenrationszustand wird der Kathoden-Separator regeneriert. Dabei wird der Kathoden-Separator von oberflächig aufkonzentrierten Metallionen, die diesen Separator nicht passieren können, freigespült, da die nicht mehr anliegende elektrische Spannung, den Abtransport nicht mehr behindert. Somit wird die Membranoberfläche von Störstoffen gereinigt, sodass die ursprüngliche Permeanz und Permeabilität wieder weitestgehend hergestellt wird.

Zwischen den beiden Betriebszuständen (Produktion/Regeneration) wird gemäß einer Ausführungsform alternierend gewechselt. Dabei ist die Regenerationsphase deutlich kürzer als die Produktionsphase. Konkret sollte die zeitliche Dauer des Produktionszustandes $t_P$ mehr als 10 oder gar mehr als 100 mal so lange dauern, wie die Dauer des Regenerationszustand $t_R$. Also gilt $t_P > f^* \, t_R$ mit f größer 1 oder mit f größer 10 oder mit f größer 100.

Statt die Hilfskathode lediglich zeitweise einzuschalten ist es auch möglich, die Hilfskathode dauerhaft eingeschaltet zu lassen, sodass ein kombinierter Produktions-/Regenerationszustand gefahren wird. Die Hilfskathode wird dementsprechend flächenmäßig kleiner bemessen als die eigentliche Kathode. Konkret sollte die Hilfskathodenfläche $A_{AK}$ so gewählt sind, dass gilt $A_K > f^* \, A_{AK}$ mit f größer 1 oder mit f größer 10 oder mit f größer 100. Die Fläche $A_K$ ist dabei die Fläche der Kathode. Der Flächenfaktor f entspricht hier dem Zeitfaktor f der alternierenden Betriebsweise.

In dem kombinierten Produktions- und Regenerationszustand ist die Anode über die erste elektrische Leitung und die Kathode und die Hilfskathode über die zweite elektrische Leitung mit der elektrischen Spannungsquelle verbunden und Anode und Kathode und Hilfskathode werden mit der elektrischen Spannung U beaufschlagt, sodass der elektrischer Strom I zwischen Anode und Kathode und Hilfskathode fließt.

Der Vorteil des kombinierten Produktions- und Regenerationszustand ist, dass die Mittel zum Umschalten der Produktionszustände (Schaltrelais) entfallen können. Nachteil ist, dass das Verhältnis f nicht so leicht geändert werden kann.

Vorteilhaft ist auch eine Betriebsweise mit zwei Betriebszuständen, nämlich einen kombinierten Produktions- und Regenerationszustand und einem reinen Produktionszustand. Dabei wird alternierend zwischen dem Produktionszustand (p) und dem kombinierten Produktions- und Regenerationszustand (k) gewechselt, wobei ein einzelner Produktionszustand (p) über eine zeitliche Dauer von $t_P$ durchgeführt wird und wobei ein einzelner kombinierter Produktions- und Regenerationszustand (k) über eine zeitliche Dauer von $t_K$ durchgeführt wird, wobei gilt

$$t_P > g^* \, t_K$$

mit g größer 50 oder mit g größer 500 oder mit g größer 5000.

Der Faktor g fällt hier deutlich höher aus als bei den beiden anderen Betriebsweisen (Faktor f). Dies führt dazu das der Produktionsbetrieb besonders lange ist. Die Produktivität der elektrochemischen Zelle wird so langfristig gesteigert.

Die Hilfskathode wird vorzugsweise außerhalb des zentralen Kompartiments angeordnet. Dann nimmt sie innerhalb der Zelle keinen Platz weg und steht dem Austausch der Ionen nicht im Weg. Es genügt, wenn die Hilfskathode mit dem Zentral-Elektrolyt in Kontakt steht. Erstaunlicherweise genügt es, die Hilfskathode in dem Vorlagebehälter des Zentral-Elektrolyts oder in der Zuleitung des Zentral-Elektrolyts zu platzieren.

Die Hilfselektrode besteht vorzugsweise aus einem textilen Material. Diese umfassen textile Liniengebilde wie beispielsweise Fäden, Garne, Drähte oder Fasern sowie textile Flächengebilde wie beispielsweise Gewebe, Gestricke, Gewirke, Gelege, Filze oder Vliese. Das textile Material muss elektrisch leitend und kathodisch aktiv sein. Dies wird etwa mit nickelhaltigen Materialien erzielt. Einfachstenfalls wird ein nickelhaltiger, rostfreier Stahl als Material für die Hilfskathode verwendet. Es kann auch reines Nickel verwendet werden. Das Material wird einfachstenfalls als Draht verwendet oder als Drahtgewebe. Selbstverständlich kann auch reines Titan oder hochwertigeres Elektrodenmaterial eingesetzt werden, wie z.B. Ti, Pt, Nb o.ä..

Wenn die elektrochemische Zelle erfindungsgemäß betrieben wird, erfolgt gemäß der elektrochemischen Modellvorstellung eine Elektrolyse von Wasser und eine Elektrodialyse von Anionen. Dies macht sich durch die Bildung von Sauerstoff an der Anode und Wasserstoff an der Kathode bemerkbar sowie durch die Abreicherung der Anionen im Zentral-Elektrolyt und deren Anreicherung im Anolyt. Darüber hinaus führt der erfindungsgemäße Betrieb zu einer elektrochemischen Synthese von Lithiumhydroxid und/oder Lithiumhydroxidmonohydrat an der Kathode. Diese Zielprodukte lassen sich aus dem Katholyt abtrennen oder fallen sogar von allein darin aus. All dies erfolgt gleichzeitig.

Das erfindungsgemäße Verfahren soll nun anhand von Ausführungsbeispielen näher erläutert werden. Dafür zeigen:

Fig. 1:     Prinzipieller Aufbau Dreikammerzelle;
Fig. 2:     Anlage mit Dreikammerzelle im kontinuierlichen Betrieb;
Fig. 3:     Membrandialyse im Betrieb;
Fig. 4:     Wasserelektrolyse im Betrieb;
Fig. 5p:    Dreikammerzelle mit vollflächiger Hilfskathode im Produktionsbetrieb;
Fig. 5r:    Dreikammerzelle mit vollflächiger Hilfskathode im Regenerationsbetrieb;
Fig. 6:     Dreikammerzelle mit verkleinerter Hilfskathode im Kombibetrieb;
Fig. 7:     Dreikammerzelle mit perforierter Hilfskathode im Kombibetrieb;
Fig. 8:     Dreikammerzelle mit vorgelagerter Hilfskathode im Kombibetrieb.

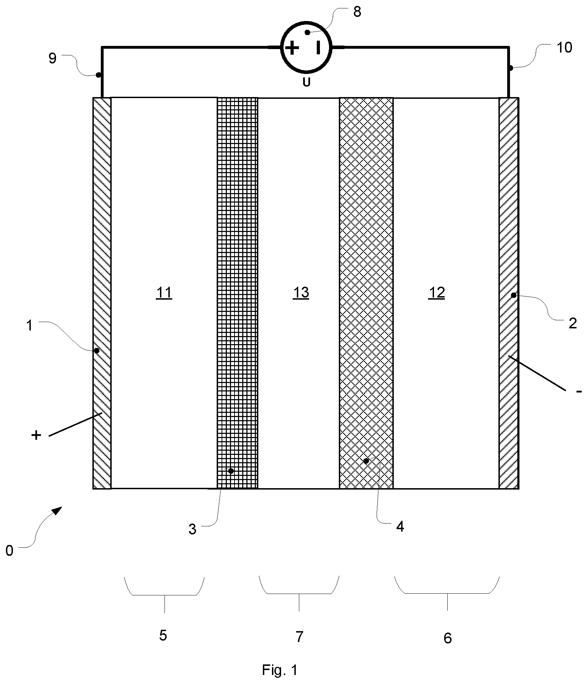

Figur 1 zeigt den prinzipiellen Aufbau einer elektrochemischen Dreikammerzelle, wie sie im erfindungsgemäßen Verfahren betrieben wird.

Die elektrochemische Zelle 0 umfasst zwei Elektroden, nämlich eine Anode 1 und eine Kathode 2. Zwischen Anode 1 und Kathode 2 sind zwei Separatoren angeordnet, nämlich ein Anoden-Separator 3 und ein Kathoden-Separator 4. Der Anoden-Separator 3 befindet sich näher an der Anode 1 als der Kathoden-Separator 4, währenddessen sich der Kathoden-Separator 4 näher an der Kathode 2 befindet als der Anoden-Separator 3. Zwischen den Elektroden 1, 2 und Separatoren 3, 4 befinden sich drei Kompartimente 5, 6, 7 innerhalb der elektrochemischen Zelle 0, weshalb diese auch als Dreikammerzelle bezeichnet wird. Das erste Kompartiment 5 erstreckt sich zwischen Anode 1 und Anoden-Separator 3 und wird deswegen als anodisches Kompartiment 5 bezeichnet. Das zweite Kompartiment 6 erstreckt sich analog zwischen Kathoden-Separator 4 und Kathode 2 und wird deswegen kathodisches Kompartiment 6 bezeichnet. In der Mitte der elektrochemischen Zelle 0 befindet sich das dritte Kompartiment 7, was entsprechend als zentrales Kompartiment 7 bezeichnet wird. Das zentrale Kompartiment 7 wird einerseits vom Anoden-Separator 3 und andererseits vom Kathoden-Separator 4 begrenzt.

Wichtig ist die Materialität der Separatoren 3, 4: Der Anoden-Separator 3 muss eine Leitfähigkeit für Anionen haben. Sofern der Anoden-Separator 3 auch eine Leitfähigkeit von Kationen hat, sollte die Leitfähigkeit für Kationen kleiner sein als die für Anionen. Dies ist bei den meisten Anionen-leitenden Materialien der Fall. Geeignete Anionen-leitende Materialien sind organischer Natur. Beispiele sind Polymere, welche einen Backbone aufweisen, an dem mindestens eine kationische funktionelle Gruppe gebunden ist. Die kationisch funktionelle Gruppe ermöglicht einen intrinsischen Transport der Anionen, insbesondere von Hydroxidionen ($OH^-$) durch den Anoden-Separator 3, währenddessen Kationen wie etwa Protonen ($H^+$) den Anoden-Separator 3 kaum überwinden können. Der Kathoden-Separator 4 ist umgekehrt konfiguriert: Er besitzt eine höhere Leitfähigkeit für Kationen als für Anionen. Darüber hinaus ist die Kationen-Leitfähigkeit des Kathoden-Separators 4 selektiv: Die Leitfähigkeit für Li-Kationen (Li+) muss größer sein als für andere Kationen wie etwa als Ca+ oder Na+. Dies führt dazu, dass der Kathoden-Separator 4 Li-Kationen bevorzugt durchlässt, währenddessen andere Kationen zumindest langsamer oder gar nicht transportiert werden. Für Anionen ist der Kathoden-Separator 4 praktisch undurchlässig. Geeignete Materialien, die diese Eigenschaften aufweisen sind anorganische LiSICons, also ein spezieller Typ von (Glas)-Keramik mit intrinsischer Leitfähigkeit für Li-Ionen. Zumindest einer der beiden Separatoren 3, 4 muss elektrisch isolieren. Dies ist bei anorganischen LiSICons der Fall. Sofern ein anorganisches LiSICon als Kathoden-Separator eingesetzt wird, ist die elektrische Leitfähigkeit des organischen Anoden-Separators 1 von untergeordneter Wichtigkeit. Bevorzugt wird jedoch ein organischer Anoden-Separator eingesetzt, der ebenfalls eine geringe elektrische Leitfähigkeit aufweist.

Konkret sollte die spezifische Leitfähigkeit für Elektronen g (elektrische Leitfähigkeit) des elektrisch isolierenden Separators bei einer Temperatur von 23°C weniger als $10^{-7}$ S/cm ($10^{-9}$ S/m) oder weniger als $10^{-12}$ S/m oder weniger als $10^{-16}$ S/m betragen. Solche Werte sind anorganische Materialien typisch, sie sind aus elektronenleitender Sicht als Nichtleiter zu qualifizieren. Die beschriebenen LiSICons weisen spezifische Leitfähigkeiten in dieser Größenordnung auf und sind daher als elektrischer Isolator anzusehen. Ionomere, die als Anoden-Separator eingesetzt werden, erreichen diese spezifischen Leitfähigkeiten nicht immer. Deswegen wird vorzugsweise der Kathoden-Separator als elektrischer Isolator eingesetzt. Die Messung der spezifische Leitfähigkeit für Elektronen g erfogt per Impedanz-Spektroskopie, wie oben für die Ionenleitfähigkeit beschrieben.

Die elektrische Leitfähigkeit zumindest eines der beiden Separatoren 3, 4 ist bedeutend, denn die beiden Elektroden 1, 2 müssen elektrisch voneinander isoliert sein. Dies verhindert, dass es innerhalb der elektrochemischen Zelle 0 zu einem elektrischen Kurzschluss kommt, wenn an den Elektroden 1, 2 eine elektrische Spannung U angelegt wird. Zum Anlegen einer solchen Spannung U ist eine elektrische Spannungsquelle 8 vorgesehen, die über eine erste elektrische Leitung 9 und eine zweite elektrische Leitung 10 mit der Anode 1 bzw. der Kathode 2 elektrisch leitend verbindbar ist. Die Verschaltung ist so gewählt, dass der positive Pol (+) der elektrischen Spannungsquelle 8 mit der Anode 1 verbunden ist, währenddessen der negative Pol (-) an der Kathode 2 angeschlossen ist. Folglich ist bei eingeschalter Spannungsquelle 8 die Kathode 2 negativ geladen, währenddessen die Anode 1 positiv geladen ist. Das Schalten der Spannungsquelle 8 und die Höhe der Spannung $U$ wird später näher erläutert.

Neben den bisher beschriebenen festen Bauteilen der elektrochemischen Zelle 0 umfasst diese auch fließfähige Elemente in Gestalt von drei Elektrolyten 11, 12, 13. Der erste Elektrolyt 11 befindet sich im ersten, anodischen Kompartiment 5 und wird als entsprechend Anolyt 11 bezeichnet. Der zweite Elektrolyt 12 befindet sich im zweiten, kathodischen Kompartiment 6 und wird analog als Katholyt 12 bezeichnet. Im zentralen Kompartiment 7 ist der Zentral-Elektrolyt 13 angeordnet. Alle Elektrolyten 11, 12, 13 sind fließfähig aber nicht notwendigerweise vollständig flüssig. Es kann sich um mehrphasige Mischungen mit einer flüssigen, einer festen und einer gasförmigen Phase handeln. Alle drei Elektrolyten enthalten aber zumindest flüssiges Wasser. Die genaue Zusammensetzung der einzelnen Elektrolyte 11, 12, 13 wird später erläutert. Wichtig zu verstehen ist, dass sich die Zusammensetzung von Anolyt, Katholyt und Zentral-Elektrolyt im laufenden Betrieb der elektrochemischen Zelle 0 stets ändern.

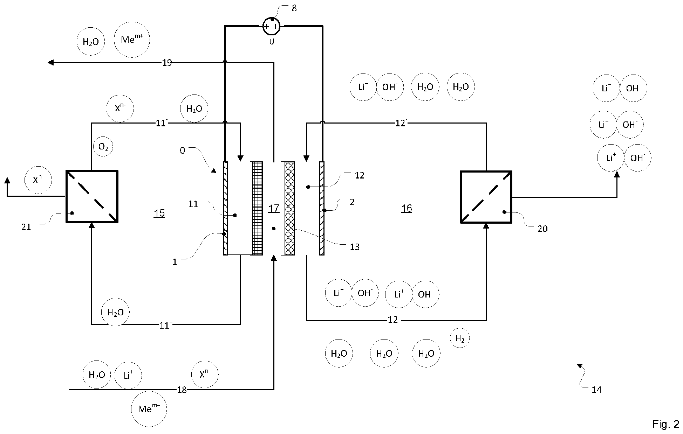

Darüber hinaus können die drei Elektrolyten 11, 12, 13 vorzugsweise kontinuierlich ersetzt werden, sodass sich trotz der ändernden Zusammensetzung ein stationärer Fließprozess durch die drei Kompartimente 5,6,7 der elektrochemischen Zelle 0 einstellt. Dies ist in Figur 2 anhand eines schematisierten Setups einer Anlage 14 dargestellt.

Innerhalb der Anlage 14 ist die elektrochemische Zelle 0 in zwei Kreisläufe 15, 16 eingegliedert, nämlich in einen anodischen Kreislauf 15 und einen kathodischen Kreislauf 16. Im anodischen Kreislauf 15 zirkuliert der Anolyt 11 durch das anodische Kompartiment 5, währenddessen der Katholyt 12 durch das kathodische Kompartiment 6 zirkuliert. Der Zentral-Elektrolyt 13 zirkuliert nicht sondern durchfließt das zentrale Kompartiment 7 nur einmal in einem geraden Durchgang 17.

Anders als in Figur 2 dargestellt ist es auch möglich, den Zentral-Elektrolyt 13 durch das zentrale Kompartiment 7 zirkulieren zu lassen. Dafür ist ein großer Pufferbehälter für Zentral-Elektrolyt erforderlich, aus dem das zentrale Kompartiment 7 mit Zentral-Elektrolyt beaufschlagt wird. Der aus dem zentralen Kompartiment 7 abgezogene Zentral-Elektrolyt wird in den Pufferbehälter rezykliert. Im Betrieb würde die Li-Konzentration in diesem Zentral-Kreislauf immer weiter fallen, bis eine "Grenzkonzentration" erreicht ist. Danach würde man den gesamten Inhalt dieses Pufferbehälters austauschen und die nächste Charge aufarbeiten und das Lithium abtrennen.

In Hinblick auf die in Figur 2 dargestellte Kreislaufführung von Anolyt 11 und Katholyt 12 sei darauf hingewiesen, dass diese beiden Elektrolyten 11, 12 kontinuierlich bereitgestellt werden, nämlich in ihrem jeweiligen Kreislauf 15, 16. Auch der Zentral-Elektrolyt 13 wird in der in Figur 2 dargestellten Anlage 14 kontinuierlich bereitgesellt, jedoch im geraden Durchgang 17. Alternativ wäre es denkbar, alle drei Elektrolyte 11, 12, 13 nicht fließen zu lassen und dementsprechend nur einmal in ihrem jeweiligen Kompartiment 5, 6, 7 bereit zu stellen. Dies wäre ein Batch-Prozess, der nicht bevorzugt ist. Denkbar sind auch ein gemischter Conti/Batch-Betrieb, bei dem etwa Anolyt 11 und Katholyt 12 kontinuierlich zirkulieren, währenddessen der Zentral-Elektrolyt nur einmal als Batch im zentralen Kompartiment 7 vorgelegt wird. Ebenso denkbar ist es, lediglich den Katholyt 12 als Batch bereitzustellen und Anolyt 11 und Zentral-Elektrolyt 13 kontinuierlich zu ersetzen.

Wenn hier also von einem Bereitstellen der Elektrolyte die Rede ist, umfasst dies sowohl das einmalige Bereitstellen (batch), als auch das kontinuierliche Bereitstellen im Kreislauf 15, 16 oder im geraden Durchgang 17. Der erfindungsgemäße Betrieb der elektrochemischen Zelle umfasst auch Mischformen von einmaligem und kontinuierlichem Bereitstellen (konti/batch-Betrieb) der Elektrolyte 11, 12, 13.

Der erfindungsgemäße Betrieb der elektrochemischen Zelle 0 dient der Aufarbeitung lithiumhaltiger Wässer. Folglich handelt es sich bei der in Figur 2 dargestellten Anlage 14 um eine Anlage zur Aufarbeitung lithiumhaltiger Wässer. Das lithiumhaltige Wasser wird als Frischwasser 18 in das zentrale Kompartiment 7 eingespeist. Das Frischwasser 18 ist aus verfahrenstechnischer Sicht als Feed aufzufassen. Innerhalb der elektrochemischen Zelle 0 laufen bei eingeschalteter Spannung U diverse elektrochemische Prozesse ab, die später noch eingehend erläutert werden. Diese führen dazu, dass das in dem Frischwasser 18 enthaltene Lithium, genauer gesagt, die darin gelösten Lithium-Kationen $Li^+$, aus dem Frischwasser 18 abgereichert und in dem Katholyt 12 angereichert werden. Im Zuge der Abreicherung des Lithium aus dem Frischwasser 18 wird dieses zu einem Abwasser 19, welches aus dem zentralen Kompartiment 7 abgezogen wird. Die Li-Konzentration im Abwasser 19 ist daher geringer als die Li-Konzentration im Frischwasser 18. Das Abwasser 19 ist daher eher lithiumarm. Aus elektrochemischer Sicht ist sowohl das Frischwasser 18 als auch das Abwasser 19 als Zentral-Elektrolyt 13 aufzufassen. Der Übergang des Frischwassers 18 in das Abwasser 19 durch die Abreicherung des Lithiums ist als die bereits erörterte Änderung der Zusammensetzung des Elektrolyten während des Betriebs der Zelle aufzufassen und zu verstehen. Auch der Anolyt 11 und der Katholyt 12 ändern ihre Zusammensetzung in Folge der elektrochemischen Prozesse:

Im Katholyt 12 wird Li angereichert, sodass die Konzentration von Lithium in dem Katholyt $12^+$, der aus dem kathodischen Kompartiment 7 abgezogen wird, größer ist als in dem Katholyt $12^-$, der in das kathodischen Kompartiment 7 eingespeist wird. Der abgezogene Katholyt $12^+$ ist lithiumreich, währenddessen der eingespeiste Katholyt $12^-$ lithiumarm ist. Um eine Kreislaufführung des Katholyts 12 zu ermöglichen, ist in dem kathodischen Kreislauf 16 ein primärer Trennapparat 20 eingegliedert, welcher die gewünschte Lithiumverbindung, nämlich Lithiumhydroxid LiOH bzw. Lithiumhydroxidmono-hydrat ($LiOH \circ H_2O$), aus dem lithiumreichen Katholyt $12^+$ abtrennt, sodass der lithiumarme Katholyt $12^-$ zurückbleibt und in das kathodische Kompartiment 7 rezykliert wird. Das abgetrennte Lithiumhydroxid(monohydrat) stellt aus verfahrenstechnischer Sicht das Zielprodukt des Prozesses dar.

Analog ist in dem anolytischen Kreislauf 15 ein sekundärer Trennapparat 21 eingegliedert, welcher dazu dient, im Frischwasser 18 enthaltene, unerwünschte Anionen $X^{n-}$ aus dem Prozess auszuschleusen. Bei den unerwünschten Anionen $X^{n-}$ handelt es beispielsweise um Sulfate oder Chloride oder andere ein- oder mehrwertige negativ geladene Ionen. Diese Ionen stammen aus im Frischwasser 18 gelösten Salzen. Um dafür zu sorgen, dass die Ladungsbilanz gleichbleibt und um zu verhindern, dass es zu einer Aufkonzentrierung von Anionen im Zentral-Elektrolyt oder gar zu unerwünschten Anodenreaktionen wie etwa zu Chlorgas ($Cl_2$) kommt, werden diese Anionen aus dem Zentral-Elektrolyt 13 abgereichert und im Anolyt 11 angereichert. Die Konzentration dieser Anionen $X^{n-}$ nimmt daher im Anolyt 11 zu, sodass die Konzentration an Anionen $X^{n-}$ im aus dem ersten Kompartiment abgezogenen Anolyt $11^+$ größer ist als im zugeführten Anolyt $11^-$. Der abgezogene Anolyt $11^+$ ist daher reich an diesen Anionen, währenddessen der zugeführte Anolyt $11^-$ anionenarm ist. Der genaue Prozess, wie die Anionen im Anolyt angereichert werden, wird später erläutert. Wichtig ist jedoch zu erwähnen, dass die Anionen $X^{n-}$ im Anolyt 11 sich zu anderen Stoffen, vor allem zu Säuren, Salzen oder molekulare Gase verbinden können, abhängig von der Zusammensetzung des Anolyts. Die Anionen können daher vom Sekundärtrennappart 21 auch als Teil einer solchen Verbindung abgetrennt werden. Sofern diese Verbindungen harmlos sind, lässt sich der abgezogene Anolyt $11^+$ auch als zweites Abwasser entsorgen. Der anolytische Kreislauf 15 entfällt in diesem Fall, der sekundäre Trennappart 21 wäre verzichtbar.

Sofern in einer Anodenreaktion brauchbare Säuren wie beispielsweise Schwefelsäure $H_2SO_4$ oder Salzsäure HCl gebildet wird, kann der abgezogene Anolyt $11^+$ auch zur Behandlung von Schwarzmasse genutzt werden: Schwarzmasse ist ein Gemisch, dass bei der Desintegration von gebrauchten LIB entsteht. Sie enthält neben Lithium auch die typischerweise in LIB anzutreffenden Elektrodenmaterialen Ni, Mn, Co, Al, Fe und Graphit sowie Kupfer als Leitermaterial. Mit Hilfe der genannten Säuren können in der Schwarzmasse enthaltene Metalle gelöst werden. Ein säurehaltiger, abgezogener Anolyt $11^+$ ließe sich somit in vorgelagerten Prozessstufen einer LIB-Aufarbeitung nutzen.

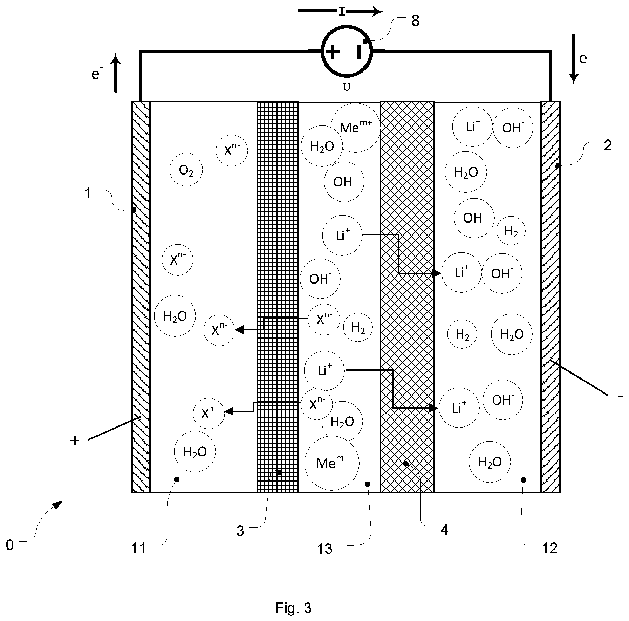

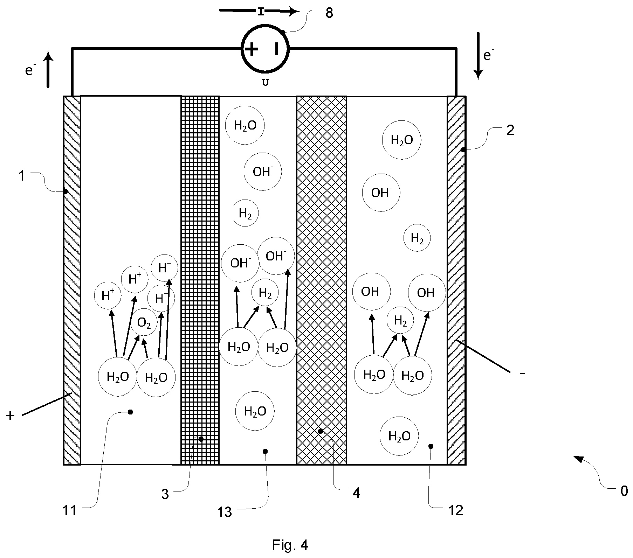

Wie bereits erwähnt, finden im erfindungsgemäßen Betrieb der elektrochemischen Zelle 0 diverse elektrochemische Prozesse gleichzeitig statt. Welche Prozesse genau ablaufen, hängt von der genauen Zusammensetzung der Elektrolyten 11, 12, 13 ab. In jedem Fall findet jedoch gleichzeitig eine membrangestützte Elektrodialyse der anwesenden Ionen und eine Elektrolyse von Wasser statt. Zum besseren Verständnis werden beide Prozesse nun separat erläutert: die Elektrodialyse anhand Figur 3 und die Elektrolyse anhand Figur 4.

Die in Figur 3 dargestellte Elektrodialyse dient einerseits dazu, die im Zentral-Elektrolyt 13 enthaltenen Li-Kationen $Li^+$ im Katholyt 12 anzureichern. Darüber hinaus werden die im Zentral-Elektrolyt 13 enthaltenen, aus dem Frischwasser 18 stammenden, unerwünschten Anionen $X^{n-}$ elektrodialytisch im Anolyt 11 angereichert, um diese Anionen daran zu hindern, mit dem Kathoden-Separator 4 in Kontakt zu kommen. Auf diese Weise wird der Kathoden-Separator 4 davor geschützt, von den Anionen $X^{n-}$ und von Produkten der Anodenreaktion vergiftet zu werden. Außerdem reduziert die Abreicherung der Anionen $X^{n-}$ aus dem Zentral-Elektrolyt 13 die Bildung unerwünschter Verbindungen dieser Anionen mit den freien Li-Kationen. Auf diese Weise wird die Ausbeute der Zielverbindung Lithiumhydroxid LiOH gesteigert.

Die in Figur 3 gezeigte und hier beschriebene Elektrodialyse wird durch die spezielle Ionenleitfähigkeit der einsetzten Separator-Materialien ermöglicht und durch die angelegte elektrische Spannung $U$ getrieben. Die Polarität der elektrischen Spannungsquelle 8 ist so gewählt, dass die Kathode 2 negativ geladen ist, währenddessen die Anode 1 positiv geladen ist. Den allgemein anerkannten Modellen der Elektrochemie folgend wandern die negativ geladen Anionen in Richtung der Anode 1, wohingegen die positiv geladenen Kationen in die entgegengesetzte Richtung zur Kathode 2 ziehen. Zum Ladungsausgleich fließt ein elektrischer Strom $I$ entlang der elektrischen Leitungen 9, 10 von der Anode 1 zur Kathode 2.

Die Anionen $X^{n-}$ und $OH^-$ können aus dem Zentral-Elektrolyt 13 in den Anolyt 11 gelangen, weil der auf dem Weg liegende Anoden-Separator 3 eine intrinsische Anionenleitfähigkeit aufweist. Da im Zentral-Elektrolyt 13 die Hydroxidionen $OH^-$ meist geringer konzentriert sind als andere Anionen, wandern vornehmlich nicht-Hydroxid-Ionen durch den Anoden-Separator 3. Vice-versa gelangen die Li-Kationen $Li^+$ aufgrund der intrinsischen Lithiumionenleitfähigkeit des Kathoden-Separators 4 aus dem zentralen Kompartiment 7 in den Katholyt 12. Da der Kathoden-Separator 4 aus einem Material besteht, das eine höhere Leitfähigkeit für Li-Kationen aufweist als für andere Kationen, können andere, ein- oder mehrwertige Metall-Kationen $Me^{m+}$, die als Verunreinigungen im Frischwasser 18 enthalten sind, den Zentral-Elektrolyt 13 kaum in Richtung des Katholyts 12 verlassen, obgleich sie aufgrund ihrer positiven Ladung auch zur Kathode 2 streben. Lediglich ein kleiner Teil der kationischen Verunreinigungen $Me^{m+}$ gelingt es, den Kathoden-Separator 4 zu überwinden und im Katholyt 12 unerwünschte Nebenprodukte zu bilden (nicht dargestellt). Der Großteil der kationischen Verunreinigungen Me$^{m+}$ verbleibt im zentral-Elektrolyt 13 und wird mit dem Abwasser 19 aus dem Prozess ausgeschleust. Dank der speziellen Kationen-Selektivität des Kathoden-Separators 4 zu Gunsten des Lithiums ist die Reinheit des Zielprodukts LiOH / LiOH∘H$_2$O erhöht und die Stromausbeute des Prozesses verbessert, da kaum elektrische Energie dafür verschwendet wird, die kationischen Verunreinigungen Me$^{m+}$ aus dem zentralen Kompartiment 7 in das kathodische Kompartiment 6 zu verbringen.

Parallel zu der in Figur 3 dargestellten Elektrodialyse erfolgt im erfindungsgemäßen Prozess die in Figur 4 dargestellte elektrochemische Spaltung (Elektrolyse) von Wasser H$_2$O in Wasserstoff H$_2$ und Sauerstoff O$_2$. Genauer gesagt, werden hier zwei Wasserspaltungen parallel praktiziert, nämlich im Katholyt eine basische Wasserspaltung gemäß Gleichung (1) und eine saure Wasserspaltung gemäß Gleichung (2) im Anolyt.

$$2 \text{ H}_2\text{O} + 2 \text{ e}^- \rightarrow \text{H}_2 + 2 \text{ OH}^- \qquad (1) \text{ Reduktion / Kathodenreaktion}$$

$$\text{H}_2\text{O} \rightarrow \tfrac{1}{2} \text{ O}_2 + 2\text{H}^+ + 2 \text{ e}^- \qquad (2) \text{ Oxidation / Anodenreaktion}$$

Im vorliegenden Verfahren wird die elektrochemische Zelle 0 mit einem basischen Elektrolyten auf Wasserbasis gefüllt und eine Spannung zwischen Anode 1 und Kathode 2 angelegt. Bei den basischen Elektrolyten handelt es sich im vorliegenden Fall um den Zentral-Elektrolyt 13 und um den Katholyt 12. Folglich muss dafür Sorge getragen werden, dass Zentral-Elektrolyt 13 und Katholyt 12 im alkalischen Bereich bereitgestellt werden. Da die als Elektrolyt genutzten Ausgangsstoffe je nach Herkunft sauer sein können, müssen diese Elektrolyten noch basisch gemacht werden. Das entsprechende alkalische, Lithiumhaltige Wasser wird entsprechend als Frischwasser 18 in das zentrale Kompartiment 7 gefahren. Die Alkalität des Katholyten 12 wird vorzugsweise durch eine Mindestmenge an Lithiumhydroxid gewährleistet, die im Katholyt gelöst 12 ist. Die aus dem LiOH stammenden Hydroxidionen OH$^-$ bedingen die Alkalität des Katholyten 12. Die Mindestmenge an LiOH wird dadurch gewährleistet, dass der primäre Trennapparat 20 so gefahren wird, dass das LiOH nicht vollständig aus dem kathodischen Kreislauf 17 entfernt wird. Zum Anfahren des Prozesses wird dem Katholyt 12 eine Startdosis LiOH zugegeben.

Auf Kathodenseite der Dreikammerzelle, also im Zentral-Kompartiment 13 und im kationischen Kompartiment 12, wird das Wasser H$_2$O in Wasserstoff H$_2$ und Hydroxidionen OH$^-$ zerlegt (Gleichung 1). Der Anoden-Separator 3 transportiert vor allem Anionen X$^{n-}$ in das anionische Kompartiment 5, wo diese zu korrespondierenden Verbindungen wie Chlor im Falle von Chlorid-Ionen oxidiert werden können. Zudem wird an der Anode 1 Wasser H$_2$O oxidiert und es werden Protonen H$^+$ und Sauerstoff O$_2$ gebildet (Gleichung 2). Auf diese Weise entsteht auf der Anodenseite Sauerstoff O$_2$, währenddessen Wasserstoff H$_2$ auf der Kathodenseite entsteht. An der Anode bilden sich aus den Protonen auch die entsprechenden Säuren der Anionen, etwa Salzsäure oder Schwefelsäure, jeweils in dissoziierter Form.

Darüber hinaus führt die Anwesenheit der Hydroxidionen OH$^-$ im Katholyt 12 dazu, dass sich diese mit den dort anwesenden Li-Kationen Li$^+$ zu Lithiumhydroxid LiOH verbinden (Gleichung 3).

$$\text{Li}^+ + \text{OH}^- \rightarrow \text{LiOH} \qquad (3) \text{ Synthese von LiOH}$$

Das LiOH liegt zunächst gelöst vor, also als Li$^+$ Kationen und Hydroxidionen OH$^-$. Sobald die Konzentration dieser Ionen die Sättigungsgrenze erreicht, fällt festes Lithiumhydroxid (LiOH) bzw. Lithiumhydroxidmonohydrat (LiOH∘H$_2$O) aus, dem Zielprodukt des Prozesses.

Das Zielprodukt wird über den primären Trennapparat 20 aus dem Katholyt 12 gewonnen. Wasserstoff H$_2$ und Sauerstoff O$_2$ sind Nebenprodukte. Aufgrund ihrer Gasform entweichen die beiden Nebenprodukte leicht aus dem Katholyt 12 bzw. dem Anolyt 11 und können entsprechend aufgefangen und genutzt werden. Ein Trennapparat für das Nebenprodukt Wasserstoff H$_2$ oder Sauerstoff O$_2$ ist nicht zwingend erforderlich, aber denkbar.

Für das Verständnis des Gesamtprozesses ist es wichtig zu erkennen, dass die Li-Kationen Li$^+$, die im Katholyt 12 das LiOH bilden, erst im Wege der membrangestützten Elektrodialyse (Figur 3) in den Katholyt 12 gelangt sind. Die Hydroxidionen OH$^-$,die sich im Katholyt 12 gemäß Gleichung 3 mit den eingewanderten Li-Kationen Li$^+$ verbinden, werden indes im Katholyt 12 gebildet, nämlich durch die Kathodenreaktion der Wasserspaltung gemäß Gleichung 1 (Figur 4). Der erfindungsgemäße Betrieb der elektrochemischen Zelle 0 basiert also auf der simultanen Durchführung der Wasserelektrolyse und der membrangestützten Elektrodialyse.

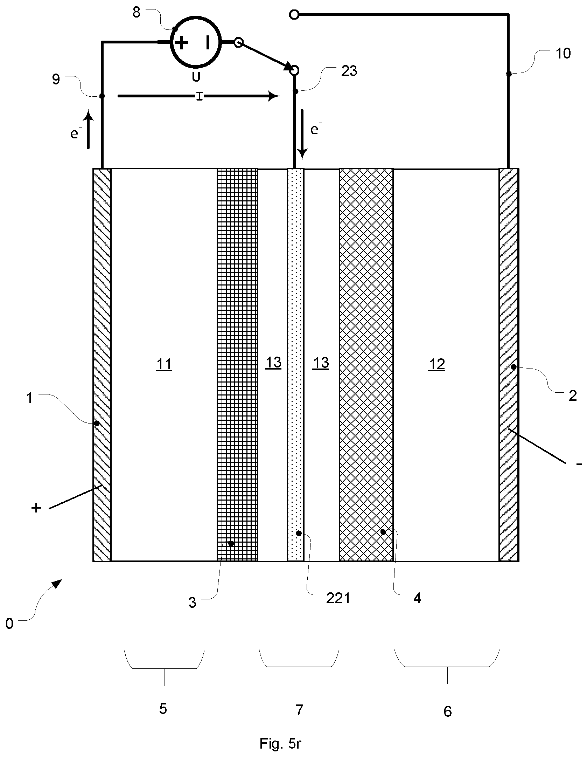

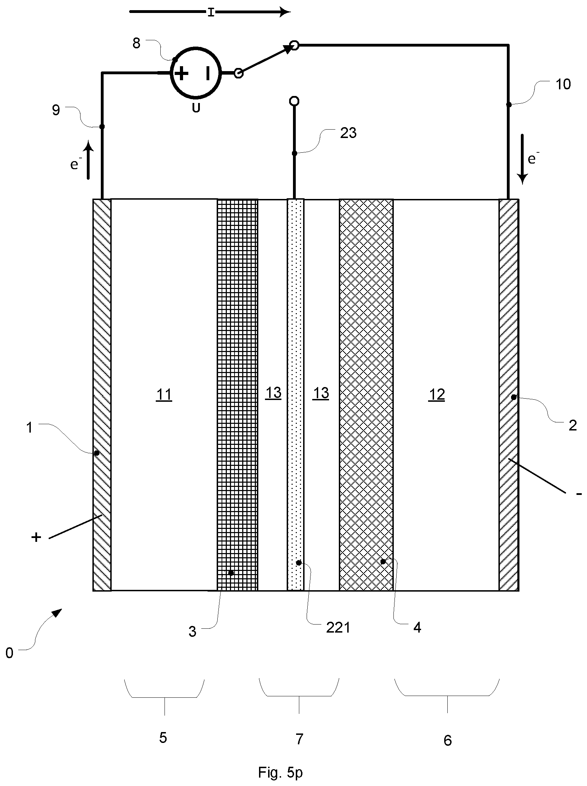

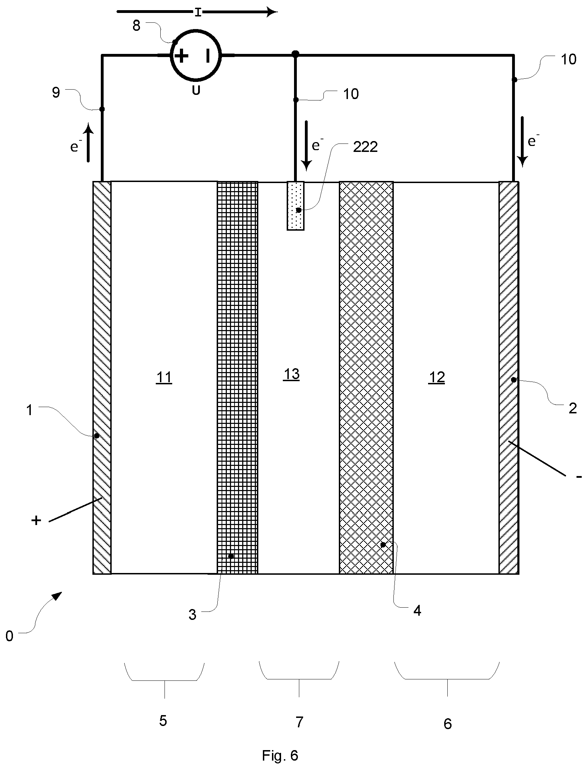

Eine besondere Ausführungsform des erfindungsgemäßen Betriebs sieht vor, dass die elektrochemische Zelle mit einer Hilfskathode betrieben wird. Die Figuren 5p, 5r, 6, 7 und 8 zeigen jeweils eine Ausgestaltung einer Dreikammerzelle mit Hilfskathode. In Figur 5p und 5r handelt es sich um eine vollflächige Hilfskathode 221, in den Figuren 6, 7 und 8 jeweils um eine verkleinerte Hilfskathode 222. In allen Fällen steht die Hilfskathode 221/222 mit dem Zentral-Elektrolyt 13 in Kontakt.

Die in den Figuren 5p, 5r dargestellte Hilfskathode 221 weist dieselbe Fläche auf wie die beiden anderen Elektroden 1, 2. Die Hilfskathode 221, lässt sich über eine dritte elektrische Leitung 23 mit dem negativen Pol der Spannungsquelle 8 verschalten (Figur 5r). Die Verbindung zwischen dem negativen Pol der Spannungsquelle 8 und der Kathode 2 über die zweite elektrische Leitung 10 ist dann unterbrochen, sodass der Strom I zwischen Anode und Hilfskathode 221 fließt. In diesem, in Figur 5r dargestellten Betriebszustand befindet sich die elektrochemische Zelle 0 im Regenerationsbetrieb. Im Regenerationsbetrieb werden an der Hilfskathode 221 entsprechend der Gleichung (1) Hydroxidionen $OH^-$ gebildet. Diese fangen Protonen $H^+$ durch Bildung eines Wassermoleküls $H_2O$ ab. Auf diese Weise wird der pH-Wert im Zentral-Elektrolyt 13 gesteigert, um im gewünschten basischen Bereich von pH 9 bis 10.5 zu arbeiten. Der Regenerationsbetrieb wird immer dann eingestellt, wenn der pH Wert auf einen unerwünschten, sauren Wert unter 8 gesunken ist. Die Einstellung des pH-Werts über die Hilfselektrode 221 gelingt sehr rasch: Der Regenerationsbetrieb muss nur etwa 1/100 der Zeit des Produktionsbetriebs betragen. Eine Zugabe von basischen Verbindungen in den Zentral-Elektrolyt 13 ist so nicht erforderlich.

Nach Abschluss der Regeneration (Figur 5r) wird zurück in den Produktionsbetrieb geschaltet (Figur 5p). In diesem ist die elektrische Spannungsquelle 8 mit ihrem negativen Pol über die zweite elektrische Leitung 10 auf die Kathode 2 geschaltet. Der Strom I fließt zwischen Anode 1 und Kathode 2. Die Hilfskathode 221 ist spannungsfrei.

Statt alternierend zwischen Produktion und Regeneration zu wechseln, ist es auch möglich, den pH-Wert kontinuierlich anzuheben mit Hilfe einer verkleinerten Hilfselektrode 222, die ebenfalls mit dem Zentral-Elektrolyt 13 kontaktiert wird (Figur 6). Die Fläche der Hilfselektrode 222 ist kleiner als die der beiden anderen Elektroden 1, 2, zum Beispiel etwa nur 1/100. Die Hilfselektrode 222 wird dauerhaft über die zweite elektrische Leitung 10 mit dem negativen Pol der elektrischen Spannungsquelle 8 verbunden; die zweite elektrische Leitung 10 ist entsprechend verzweigt. Somit fließt dauerhaft der Strom I zwischen Anode 2 und Hilfskathode 222 und Kathode 2. Aufgrund der kleineren Fläche der Hilfskathode 222 werden nur geringfügig Hydroxidionen $OH^-$ in dem Zentral-Elektrolyt 13 gebildet, genug, dass der pH Wert konstant im gewünschten basischen Bereich von 9 bis 10.5 bleibt. Eine Zugabe von basischen Substanzen ist dann nicht erforderlich. Der dauerhafte Betrieb mit der verkleinerten Hilfskathode 22 ist als kombinierter Regenerations-/Produktionszustand aufzufassen.

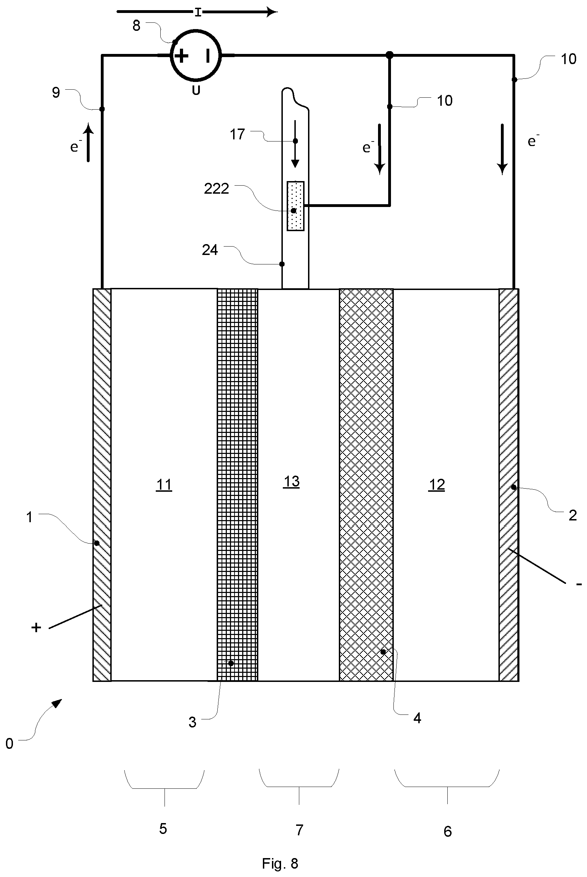

Ein besonderer Vorteil der verkleinerten Hilfskathode 222 ist, dass diese sich auch außerhalb der elektrochemischen Zelle 0 etwa in der Zuleitung des Zentral-Elektrolyt 13 platzieren lässt. Das spart Platz im dritten Kompartiment 7. Eine entsprechende Ausführungsform ist in Figur 8 dargestellt.

Es ist zudem auch möglich, die verkleinerte Hilfskathode 222 zwischen einem reinen Produktionszustand und einem kombinierten Regenerations-/Produktionszustand alternieren zu lassen. Dies ist eine Mischung aus den in den Figuren 5p, 5r, 6 dargestellten Betriebszuständen. Dies ermöglicht mehr Flexibilität bei der Bemessung der Fläche der verkleinerten Hilfskathode 222 und der Taktung. Dieser Mischbetrieb ist nicht gezeichnet.

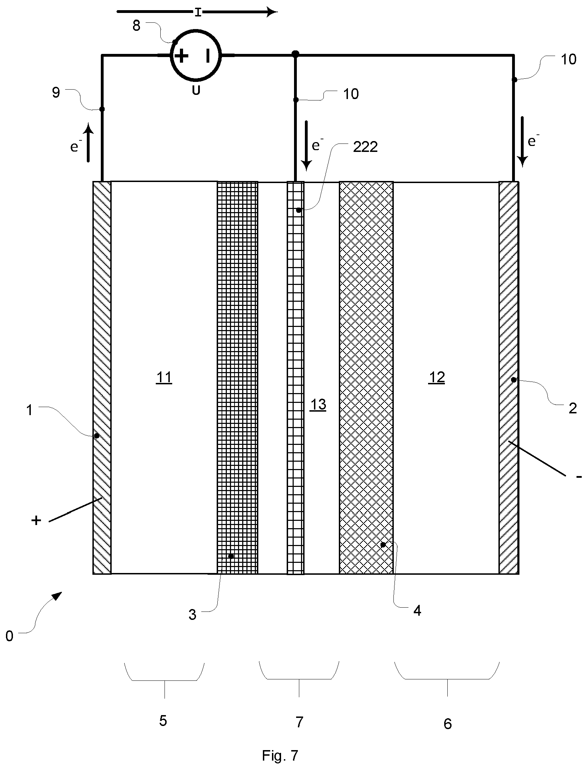

Figur 7 zeigt eine weitere Ausführungsform einer elektrochemischen Zelle 0 mit verkleinerten Hilfskathode 222. Die Verkleinerung der Hilfskathode 222 ist dadurch verwirklicht, dass ein poröses Textil als Hilfskathode verwendet wird, etwa ein Netzgewebe. Aufgrund ihrer Porosität weist die Hilfskathode 222 eine Oberfläche $A_{AK}$ auf, die kleiner ist als die Oberfläche $A_K$ der Kathode 2. In Figur 7 ist das nicht direkt ersichtlich, weil sich die textile Hilfskathode 222 durch das gesamte zentrale Kompartiment 7 erstreckt. Der Vorteil der Verwendung einer textilen Hilfskathode besteht darin, dass diese eine bessere Durchlässigkeit für die Ionen als eine vollflächige Hilfskathode aufweist und daher dem Ionenaustausch weniger im Weg steht.

Figur 8 zeigt noch eine weitere Ausführungsform einer elektrochemischen Zelle 0 mit verkleinerten Hilfskathode 222. Hier ist die Hilfskathode 222 außerhalb des zentralen Kompartiments 7 angeordnet, genauer gesagt, in einer Zuleitung 24 für den Zentral-Elektrolyt 13. Der Zentral-Elektrolyt 13 strömt im graden Durchgang 17 durch die Zuleitung 24 in das zentrale Kompartiment 7 und verlässt dies wieder (nicht dargestellt). Der Vorteil der Anordnung des Hilfskathode 222 in der Zuleitung 24 besteht darin, dass die Ionen sich im zentralen Kompartiment 7 von der Hilfskathode 222 ungehindert bewegen können. Der Kontakt der Hilfskathode 222 mit dem Zentral-Elektrolyt 13 innerhalb der Zuleitung 24 ist ausreichend.

**Beispiele:**

Die durch die erfindungsgemäße Verfahrensführung erzielten Vorteile sollen nun mit Hilfe von experimentellen Daten belegt werden:

Versuchsaufbau

Die für die Durchführung der Versuche verwendete elektrochemische Zelle 0 ist in Figur 8 dargestellt. Sie umfasst drei Kompartimente 5, 6 und 7. Die Kompartimente 7 und 6 sind von einer Ionentauschermembran, dem so genannten Kathoden-Separator 4 getrennt. Kompartiment 5 und 7 sind durch eine Membran, dem sogenannten Anoden-Separator 3 voneinander getrennt. In dem ersten Kompartiment 5 ist eine Anode 1 angeordnet. Im zentralen Kompartiment 7 befindet sich in der Zulaufleitung für den Zentral-Elektrolyt 13 eine Hilfskathode 222. In dem dritten Kompartiment 6 ist eine Kathode 2 angeordnet. Das Kompartiment 5 kann auch als anodisches Kompartiment bezeichnet werden, währenddessen das dritte Kompartiment 6 als kathodisch bezeichnet wird. Das Kompartiment 7 in der Mitte kann auch als zentrales Kompartiment 7 bezeichnet werden.

Eine erste elektrische Leitung 9 verbindet die Anode 1 mit einer Spannungsquelle 8. Eine zweite elektrische Leitung 10 verbindet die Kathode 2 mit der Spannungsquelle 8. Ein Abzweig der zweiten elektrischen Leitung 10 verbindet die Kathode 8 mit der Hilfskathode 222. Die Polarität der Spannungsquelle 8 ist so gewählt, dass der positive Pol der Spannungsquelle 8 auf die Anode 1 geschaltet ist, währenddessen der negative Pol der Spannungsquelle 8 auf die Kathode 2 und die Hilfskathode 222 geschaltet ist.

Durch die elektrischen Leitungen 9 und 10 sowie über die elektrische Spannungsquelle 8 fließt ein elektrischer Strom I. Da die Ionentauschermembran 4 elektrisch isoliert, gibt es keinen elektrischen Kurzschluss zwischen den beiden Elektroden 1 und 2 über die Ionentauschermembran 4.

Die Ionentauschermembran 4 ist eine Flachmembran, die vollständig aus einem LISiCon Material besteht. Die andere Membran 3 ist ebenfalls eine Flachmembran, sie ist aus einem Anionen leitfähigen Polymer hergestellt, wie beispielsweise eine AHA-Membran, Eurodia Industrie SAS, oder eine Neosepta-Membranen von der Firma ASTOM.

Die Hilfskathode 222 ist ein Draht, enthaltend Titan, Platin oder Edelstahl. Die Kathode 2 ist ebenfalls ein flaches Metallblech enthaltend Titan oder Nickel. Einfachstenfalls wird rostfreies Stahlblech als Kathode verwendet. Anode 1, Kathode 2 und die beiden Membranen 3, 4 haben dieselbe Gestalt, sie können rechteckig oder kreisrund sein. Die Hilfskathode 222 ist ein Draht, dessen Fläche, die in die Zuleitung 24 für den Zentral-Elektrolyt 13 ragt, 2% der aktiven Fläche A der Kathode 2 ausmacht. Dies ist in der Seitenansicht der Figur 8 nicht maßstäblich dargestellt. Anstelle von Blechen können auch Streckmetalle, Gitter oder Netze aus den angegebenen Materialien als Elektrode verwendet werden.

Die elektrochemische Zelle 0 weist eine aktive Fläche A auf, welche dem Flächeninhalt der beiden Membranen 3, 4, der Anode 1 und der Kathode 2 entspricht. Wie erwähnt, ist die Hilfskathode 222 kleiner, deren aktive Oberfläche beträgt lediglich 2/100*A.

Im Betrieb werden die Kompartimente 5 und 7 mit einem Feed 13 beaufschlagt. In den Kompartimenten 5 und 7 kann sich der gleiche Feed 13 befinden oder in einer der Kammern befindet sich eine von 13 verschiedene Lösung 11. Beim Feed 13 handelt es sich um eine wässrige Lösung enthaltend Li+ Kationen. Aus elektrochemischer Sicht ist der Feed 13 als Anolyt aufzufassen.

Bei dem Feed 13 kann es sich um eine Li-Lauge aus einer natürlichen Lagerstätte handeln oder um ein Stoffstrom, der bei der Aufarbeitung von verbrauchten LIB anfällt. Die Konzentrion der Li+ Kationen im Feed 13 sollte mindestens 200 Gew.-ppm betragen, bezogen auf die Gesamtmasse des Feeds. Meerwasser hat eine geringere Li-Konzentration und müsste daher erst aufkonzentriert werden, bevor es in dem Verfahren verwendet wird. Der Feed 13 enthält auch Anionen wie Sulfat oder Chlorid. Der Feed 13 enthält auch Verunreinigungen. Anionen und Verunreinigungen sind in Figur 1 nicht dargestellt. Hauptkomponente des Feeds 13 ist Wasser.

Das dritte Kompartiment 6 wird mit einem armen Arbeitsmedium 12⁻ beaufschlagt. Das arme Arbeitsmedium 12⁻ ist Wasser mit einer geringen Konzentration Li+ Kationen. Die Konzentration beträgt mindestens 50 Gew.-ppm bezogen auf die Gesamtmasse des armen Arbeitsmediums 12⁻. Aus elektrochemischer Sicht ist das arme Arbeitsmedium 12 als Katholyt aufzufassen.

Die elektrochemische Zelle 0 wird zudem mit einer von der Spannungsquelle 8 bezogener elektrischer Spannung U beaufschlagt. Dies bewirkt folgendes:
Zum einen kommt es zu einer Wasserelektrolyse, bei der Wasser elektrochemisch in Wasserstoff und Sauerstoff getrennt wird. An der Kathode 2 und der Hilfskathode 222 wird OH- und Wasserstoff gebildet. Die OH- - Anionen können die LiSiCon-Membran 4 allerdings nicht überwinden und verbinden sich mit den im kathodischen Kompartiment 6 vorhandenen Li⁺ Kationen zu Lithiumhydroxid. An der Anode 1 wird Sauerstoff und H⁺ gebildet. Im zentralen Kompartiment 7 (das mit der Hilfskathode 222) werden OH- - Anionen gebildet, die den pH-Wert im Kompartiment 7 stabil halten.

Die Bildung des LiOH im kathodischen Kompartiment 6 wird dadurch aufrechterhalten, dass Li+ Kationen getrieben von der Spannung U aus dem Feed 13 in Richtung der Kathode 2 wandern. Sie überwinden dabei die LiSiCon-Membran 4 aufgrund deren Leitfähigkeit für Li Ionen und reichern sich im Arbeitsmedium 12 an (Membranelektrolyse). So entsteht ein reiches Arbeitsmedium 12⁺, was aus dem dritten Kompartiment 3 abgezogen wird. Die Konzentration an Li+ Ionen im reichen Arbeitsmedium 12⁺ ist größer als im armen Arbeitsmedium 12⁻.

In der elektrochemischen Zelle 0 läuft somit gleichzeitig eine Wasserelektrolyse, eine Membranelektrolyse von Li⁺ und eine Synthese von LiOH ab.

Bei dem gleichzeitigen Betrieb der Li+ Membranelektrolyse und der Wasserelektrolyse in der elektrochemischen Zelle entstehen somit direkt Lithiumhydroxid LiOH und molekularer Wasserstoff $H_2$. Der Wasserstoff ist zumindest teilweise gelöst, er kann auch in Gasblasen vorliegen. Das LiOH fällt abhängig von der Temperatur und von der Anwesenheit von Kristallisationskeimen bereits im kathodischen Kompartiment 6 oder unmittelbar nach dem Abziehen des reichen Arbeitsmediums 12⁺ aus.

Der Feed 13 wird durch die Membranelektrolyse um Li+ abgereichert, sodass ein Abwasser 19 entsteht.

Versuchsdurchführung

Zur Durchführung der Elektrolyse werden zunächst die Elektrolyte in die beiden Anolyt- und den Katholytbehälter gefüllt, die Zulaufschläuche sind dabei abgeklemmt. Der Elektrolytbehälter, der den Zellteil versorgt, der direkt an der Membran ist, wird im Folgenden als zentrales Kompartiment bezeichnet. Im nächsten Schritt wird die Elektrolysezelle zusammengebaut. Während des Zusammenbaus soll verhindert werden, dass es zu einem Austrocknen der Membranen kommt, indem der Vorgang zügig durchgeführt wird. Ist die Elektrolysezelle zusammengebaut, wird diese an Anolyt- und Katholytbehälter sowie die mittlere Kammer angeschlossen. Dabei wird darauf geachtet, dass Zu- und Rücklauf jeweils auf der gleichen Seite angeschlossen werden. Nun können die Zulaufleitungen zur Zelle vorsichtig geöffnet werden, dabei sollten die Zulaufschläuche für Katholyt und mittlere Kammer zeitgleich geöffnet werden.

Als Anode und Kathode wurde jeweils eine runde Scheibe mit einem Durchmesser von 19.5 mm und einer Stärke von 1 mm verwendet. Bei dem Material handelte es sich jeweils um ein Titan-Streckblech, beidseitig beschichtet mit IrTi-Mischoxid, 12 g Ir/m$^2$, 1 AF D1.5 mm von der Fa. Metakem GmbH, 61250 Usingen, Deutschland.

Als Hilfskathode diente ein Draht mit einer Stärke von 2 mm, der ca. 3 mm in die Zulaufleitung des zentralen Kompartiments ragte. Bei dem Material handelt es sich um einen Titandraht, beschichtet mit IrTi-Mischoxid, 12 g Ir/m2 von der Fa. Metakem GmbH, 61250 Usingen, Deutschland.

Anode und Kathode werden mit der Spannungsquelle, dem Potentiostat Keithley 2400 der Firma Tektronix UK Ltd., Berkshire, UK verbunden. Die Hilfskathode wird mit der Kathode verbunden.

Die beprobten Membranen waren ebenfalls kreisrunde Scheiben mit einem Durchmesser von etwa 25 mm. Die Stärke der Membranen betrug etwa 1 mm. Das Material der beprobten LiSiCon-Membranen war ein Ampcera™ LISICON LAGP, von MSE Suplies®, Tuscon, USA. Das Material der beprobten organischen Anionenaustausch-Membranen war eine AHA-Membran Eurodia Industrie SAS.

Die Elektrolyse und die entsprechenden Vorlagebehälter sind während der gesamten Durchführung mit Stickstoff überlagert, um die Bildung von Lithiumcarbonat zu verhindern. Jede Zelle hat einen separaten Anolyt- und Katholytbehälter sowie eine separate mittlere Kammer. Jeder Behälter wird mit etwa 1 kg Flüssigkeit gefüllt, die genaue Masse wird durch Rückwaage ermittelt. In allen Versuchen war der Katholyt zu Beginn der Versuche immer eine 5 mmol/L LiOH Lösung (entspricht 120 gew. ppm LiOH). Der Anolyt und der Elektrolyt in der mittleren Kammer sind Lithiumsalzlösungen in verschiedenen Konzentrationen und mit verschiedenen Lithiumsalzen. Anolytbehälter und mittlere Kammer können dabei voneinander verschiedene Lösungen beinhalten. Die Startkonzentrationen und auch die genaue Konzentrationen variieren im Versuchsverlauf und sind daher auch im Diagramm der Versuche jeweils aufgeführt.

Durch Einschalten der Pumpen und der gewünschten Spannung wird der Versuch gestartet. Während des Versuchs erfolgt eine Taktung der Spannung, diese wird durch die entsprechend programmierte Steuereinheit Siemens LOGO! 230 RC der Firma Siemens gesteuert.

Die maximale Durchflussgeschwindigkeit beträgt 900 mL/ Minute und wird mittels eines Ultraschalldurchflussensors SONOFLOW CO.55/060 V2.0 der Firma Sonotec bestimmt. Die Probenahme erfolgt halbstündlich oder nach Absprache in größeren Zeitintervallen. Es werden 3mL Vorlauf gezogen und verworfen. Bei jeder Probenahme wird der jeweilige Strom notiert und von der Probe wird der pH-Wert und die Leitfähigkeit bestimmt. Anschließend werden die Proben in die entsprechenden Behälter zurückgegeben, um das Volumen nahezu konstant zu halten.

Nach Ende des Versuches werden die Behälter entleert und alle Leitungen und auch die Membran werden mit VE-Wasser gespült. Die Zelle wird demontiert, Membran wird fotografiert und es werden REM-Aufnahmen von Katholyt- und Anolytseite gemacht, um eventuelle Schädigungen oder Veränderungen der Membranen zu dokumentieren. Die Ionentauschermembran wird mikroskopisch auf evtl. Veränderungen hin überprüft. Dabei werden die Seite, die zu mittleren Kammer zeigt als auch die Anolytseite überprüft.

Die Membranperformance wird an den Kenngrößen der Permeabilität (gLi*mm/m$^2$*h) und Permeanz (g Li/m$^2$*h) gemessen. Die Permeanz gibt an, wie viel Masse an Lithium pro Membranfläche und Zeit durch die Membran transportiert werden. Die Permeabilität bezieht noch die Membrandicke mit ein und ermöglicht es somit auch unterschiedliche Membrantypen mit verschiedenen Dicken miteinander zu vergleichen. Man benötigt beide Angaben zur umfänglichen Beschreibung der Performance, da extrem dünne Membranen eine enorm hohe Permeanz ermöglichen würden, aber sofern es zu Konzentrationspolarisationseffekten in der Membranzelle kommt, würden die Permeabilitäten falsch wiedergegeben. Die Berücksichtigung der Membrandicke ist dann nicht mehr Zielführend, da der Transport nicht durch die Membran limitiert ist.

Alle in den Beispielen gezeigten Messwerte sind mit einem Mess-Fehler von ca. +/- 10% behaftet, der sich auf Ungenauigkeiten der Positionierung der Elektroden zueinander, der Bestimmungen der Dicke der Membranproben und der Konzentrationsbestimmung über Leitfähigkeitsmessungen zurückführen lässt.

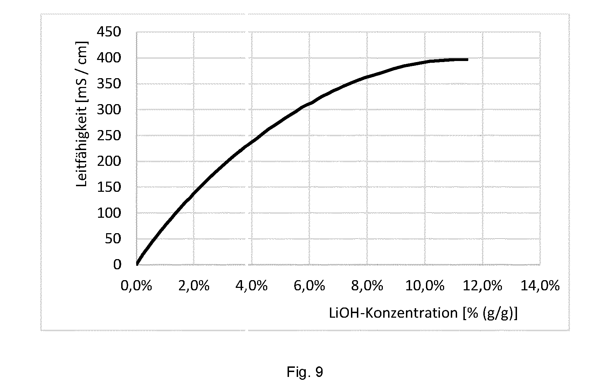

Die Konzentrationsbestimmung erfolgte Inline über eine Leitfähigkeitsmessung. Über die in Figur 9 dargestellte Kalibrierkurve wird in den Versuchsergebnissen die Leitfähigkeit in eine Konzentration übersetzt.

Figur 9:     Leitfähigkeit als Funktion der Konzentration einer LiOH-Lösung (25°C)

Folglich ist aber bei Konzentrationen über ca. 10 % LiOH eine genaue Verfolgung der wirklichen Konzentration über die Leitfähigkeitsmessungen kaum möglich.

Die Variationen innerhalb der Versuche gehen aus Tabelle 1 hervor.

Tabelle 1: Versuchsübersicht

Davon abgesehen, herrschten die folgenden, konstanten Versuchsbedingungen:

| | |
|---|---|
| Taktung: | Strom 50s an - Strom 10 s aus |
| Konzentration Katholyt: | 5 mmol/l LiOH - LiOH*H2O, 98%, Thermo Fisher Scientific |
| Spannung: | 6 V (zwischen Anode und Kathode, sowie zwischen Hilfskathode und Anode) |
| Membran: | Ampcera® LISCON LAGP |

Tabelle 1

| Versuchs-Nr.: | Qualifikation Versuch | Anionenaustauschmembran | Zentral-Elektrolyt | Anolyt |
|---|---|---|---|---|
| 1a | erfinderisch | AHA-Membran Eurodia Industrie SAS, St Martin, FR | 1 M LiCl ≥99%, Carl Roth GmbH + Co. KG | 1 M LiCl ≥99%, Carl Roth GmbH + Co. KG |
| 1b | erfinderisch | AHA-Membran Eurodia Industrie SAS, St Martin, FR | 1 M LiCl ≥99%, Carl Roth GmbH + Co. KG | 1 M LiCl ≥99%, Carl Roth GmbH + Co. KG |
| 1c | erfinderisch | AHA-Membran Eurodia Industrie SAS, St Martin, FR | 1 M LiCl ≥99%, Carl Roth GmbH + Co. KG | 1 M LiCl ≥99%, Carl Roth GmbH + Co. KG |
| 2 | erfinderisch | AHA-Membran | 1.43 M LiCl + 0.0045 M NaCl, ≥99%, Carl Roth GmbH + Co. KG | 1.43 M LiCl + 0.0045 M NaCl, ≥99%, Carl Roth GmbH + Co. KG |
| 3 | erfinderisch | AHA-Membran | 1.43 M LiCl +0.0045 M NaF, PanReac Applichem GmbH +0.015 M $CaCl_2$ ≥99%, Carl Roth GmbH + Co. KG | 1.43 M LiCl +0.0045 M NaF, PanReac Applichem GmbH +0.015 M $CaCl_2$ ≥99% Carl Roth GmbH + Co. KG |
| 4 | erfinderisch | AHA-Membran | 0.72 M $Li_2SO_4$, ≥99% Carl Roth GmbH + Co. KG +0.004 M $Na_2SO_4$ Carl Roth GmbH + Co. KG | 0.72 M $Li_2SO_4$, ≥99% Carl Roth GmbH + Co. KG +0.004 M $Na_2SO_4$ Carl Roth GmbH + Co. KG |
| 5 | erfinderisch | AHA-Membran | 9.4 M LiCl ≥99%, Carl Roth GmbH + Co. KG | 9.4 M LiCl ≥99%, Carl Roth GmbH + Co. KG |
| 6 | erfinderisch | AHA-Membran | 9.4 M LiCl + 0.043 M NaCl + 0.026 M KCl, ≥99.5%, Carl Roth GmbH + Co. KG | 9.4 M LiCl + 0.043 M NaCl + 0.026 M KCl, ≥99.5% Carl Roth GmbH + Co. KG |

<u>Versuch 1a:</u>

Der Versuchsaufbau erfolgte wie bereits oben beschrieben (Versuchsdurchführung und Detailausführung wie in Tab 1 beschrieben).

Im zentralen Kompartiment wurde eine Hilfskathode in Form eines Edelstahl-Drahtgewebes (Qualität 1.4401) mit 200 μm Maschenweite eingelegt und mit einem Draht, welcher eine elektrische Kontaktierung von außen ermöglicht, versehen (vgl. Figur 7).

Mit der Inbetriebnahme der Pumpen für die drei Kreisläufe wurde gleichzeitig die getaktete Gleichspannung von 6V zwischen Anode und Kathode angelegt. Im Laufe des Versuchs kann über die regelmäßige Probennahme die Abnahme des pH-Wert der mittleren Kammer verfolgt werden. Er fällt nach ca 24h von pH 9 auf einen Wert von 7.3 ab. Der pH-Wert des Anolyt lag nach 24h bei 2.5, der Strom lag bei ca. 30 mA.

Nach diesen 24h wurde dann für insgesamt 5 Minuten ausschließlich die Hilfskathode bei einer Spannung von 6V betrieben. Dies führt in diesem Zeitraum zu einem Strom von bis zu 200mA. Der pH-Wert der mittleren Kammer steigt auf mehr als 10.

Versuch 1b:

Bei einem weiteren Betrieb der Zelle unter den Einstellungen wie bei Versuch 1a (Versuch 1b), jetzt wieder ohne angelegter Spannung an der Hilfskathode, steigt der Strom durch die Zelle auf mehr als 70mA an, welches auch mit einer entsprechend größeren Permeanz verbunden ist.

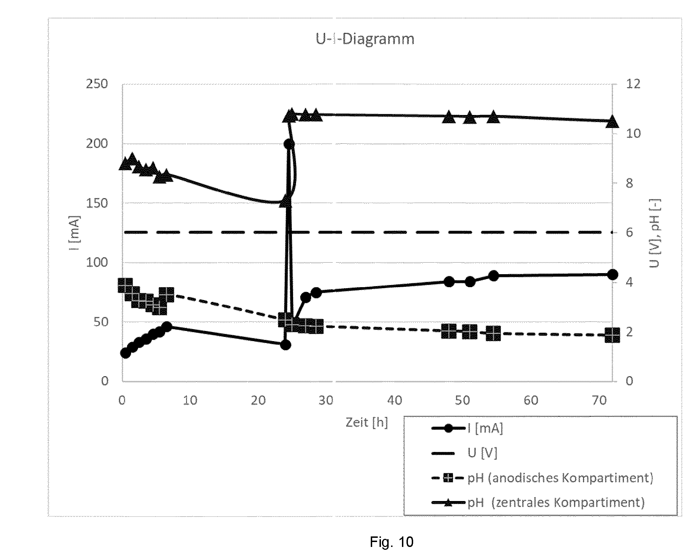

Der Verlauf der Messpunkte aus Versuch 1a und 1b ist in Diagramm der Figur 10 dargestellt.

Figur 10: Diagramm zu Versuchen 1a und 1b

Zur vereinfachten Übersicht sind alle Ergebnisse/Werte in der Tabelle 2 zusammengefasst.

Tabelle 2: Messwerte aus den Versuchen

Versuch 1c:

Unter Verwendung des gleichen Messaufbaus mit dem einzigen Unterschied, dass die Hilfskathode nun nicht als Drahtgewebe, sondern als Draht in der Zulaufleitung zur mittleren Kammer mit einer Oberfläche von 2% der Elektroden- und Membranfläche ausgeführt war (Figur 8). Die Ergebnisse sind ebenfalls in Tabelle 2 zusammengefasst.

Versuche 2 bis 6:

Die Durchführung dieser Versuche erfolgte in einem Aufbau, wie dieser in Versuch 1c verwendet wurde. Die Spannung zwischen Anode und Kathode betrug 6V und die zwischen Hilfskathode und Anode betrug auch 6V. Punktuelle Messungen des Stromes an der Hilfskathode ergaben Werte zwischen 1 und 20% des Stromes, der zwischen Anode und Kathode floss. Alle Ergebnisse nach jeweils 50h Betriebszeit der Zelle sind in Tabelle 2 aufgeführt.

Tabelle 2:

| Versuchs-Nr.: | U [V] | I [mA] | Permeanz [$g_{Li}$ / $m^2$ h] | Permeabilität [$g_{Li}$ mm / $m^2$ h] | pH Anolyt | pH Zentral-Elektrolyt | pH Katholyt |
|---|---|---|---|---|---|---|---|
| 1a | 6 | 30 | 27 | 8.5 | 2.5 | 7.3 | 12 |
| 1b | 6 | >70 | >35 | >12 | 2.0 | 11 | 12 |
| 1c | 6 | 78 | 43 | 12.8 | 2.1 | 9.5 | 12 |
| 2 | 6 | 80 | 42 | 12.6 | 2.6 | 10.2 | 12 |
| 3 | 6 | 75 | 39 | 11.7 | 2.6 | 10.1 | 12 |
| 4 | 6 | 60 | 30 | 8.9 | 2.0 | 9.5 | 12 |
| 5 | 6 | 60 | 33 | 11 | 1.0 | 7.3 | 12 |
| 6 | 6 | 64 | 45 | 13.6 | 0.2 | 7.6 | 12 |

Vergleichsversuche:

Zum Vergleich wurden Zellen ohne Anionenaustauschmembran aufgebaut. Eine Übersicht bietet Tabelle 3.

Tabelle 3: Vergleichsversuchsübersicht

Tabelle 3:

| Versuchs-Nr.: | Qualifikation Versuch | Anionenaustausch-membran | Zentral-Elektrolyt = Anolyt |
|---|---|---|---|
| 7 | nicht erfinderisch | keine | 1 M LiCl ≥99%, Carl Roth GmbH + Co. KG |
| 8 | nicht erfinderisch | keine | 0.5 M $Li_2SO_4$, ≥99% Carl Roth GmbH + Co. KG |

Die Messwerte der Vergleichsversuche sind in Tabelle 4 niedergelegt.

Tabelle 4: Messwerte aus Vergleichsversuchen

Tabelle 4:

| Versuchs-Nr.: | U [V] | I [mA] | Permeanz [$g_{Li}$ / $m^2$ h] | Permeabilität [$g_{Li}$ mm / $m^2$ h] | pH Anolyt | pH Zentral-Elektrolyt | pH Katholyt |
|---|---|---|---|---|---|---|---|
| 7 | 6 | 19 | 18 | 6 | 2.0 | 2.0 | 12 |
| 8 | 6 | 17 | 15 | 5 | 1.7 | 1.7 | 12 |

Versuch 7:

Als Vergleichsversuch wurde der in den Versuchen 1 bis 6 benutzte Aufbau in der Form abgeändert, dass die Anionenaustauschmembran zwischen dem zentralen Kompartiment und dem anodischen Kompartiment weggelassen wird, so dass die Zelle lediglich zwei getrennte Kompartimente hat, nämlich genau ein anodisches und genau ein kathodisches Kompartiment. Eine Hilfskathode wurde nicht betrieben.

Da im anodischen Kompartiment aufgrund der Protonenbildung an der Anode der pH-Wert im Lauf des Versuches reduziert wird, kommt es ab einem pH-Wert von weniger als 7 kontinuierlich zu einer Schädigung der keramischen LiSiCon-Membran. Dies führt dazu, dass die in Tabelle 4 genannten Ergebnisse keine konstanten erreichten Werte sind, sondern sich diese über die Versuchsdauer, vor allem nach 5 bis 50h, immer weiter reduzieren. Exemplarisch wurden die Daten nach ca. 24h dargestellt.

Versuch 8:

Hier gilt das gleiche wie bei Versuch 7, nur mit dem Unterschied, dass eine Lithiumsulfatlösung für die Versuche eingesetzt wurde.

Fazit:

Die Versuche belegen, dass durch den erfindungsgemäßen Betrieb einer Dreikammerzelle mit Anionenaustauschmembran als Anoden-Separator (Versuche 1a bis 7) gegenüber einer Zweikammerzelle (Versuche 8 und 9) nach derselben Betriebszeit eine höhere Permeanz und Permeabilität erhalten bleibt. Dies bedeutet, dass derselbe Kathoden-Separator bei der Aufarbeitung von Lithium-haltigen Wässern stärker abnutzt, wenn er in einer Zweikammer-Zelle eingebaut wird, als in einer Dreikammerzelle. Folglich ist im erfindungsgemäßen Betrieb der Dreikammerzelle über eine lange Nutzungszeit eine höhere Effizienz zu erwarten.

In allen Versuchen waren die Gehalte an Fremd-Kationen im Katholyt unterhalb der Nachweisgrenze. Die Reinheit des Zielprodukts wurde nicht durch im Zentral-Elektrolyt enthaltene kathodische Verunreinigungen wie z.B. durch Natrium beeinträchtigt.

Darüber hinaus fließt bei dem erfindungsgemäßen Betrieb der Zelle (Versuche 1a bis 7) ein höherer Strom als beim nicht erfindungsgemäßen Betrieb (Versuche 8 und 9). Folglich ist die Produktivität pro Fläche besser. Dies führt dazu, dass eine Anlage, die in dieser Form betrieben wird bei gleicher Produktionsleistung kleiner dimensioniert werden kann.

Der Vergleich des Betriebs mit Hilfskathode, die als Drahtgeflecht ausgeführt ist (Versuch 1) mit denen bei der die Hilfskathode in der Zuleitung ausgeführt wurde (Versuch 2 ff) zeigt, dass die Ausführung der Hilfskathode in der Zuleitung im Dauerbetrieb zu einer sehr guten Permeanz führt, ohne dass regelmäßig zwischen den verschiedenen Betriebszuständen gewechselt werden muss. Diese Vereinfachung in der Ausführung der Zelle, wie auch in der Durchführung, zeigt, dass die Anordnung der Hilfskathode im Zulauf die besonders bevorzugte Ausführungsform ist.

Bezugszeichenliste

| | |
|---|---|
| 0 | elektrochemische Zelle (Dreikammerzelle) |
| 1 | Anode |
| 2 | Kathode |
| 3 | Anoden-Separator |
| 4 | Kathoden-Separator |
| 5 | anodisches Kompartiment |
| 6 | kathodisches Kompartiment |
| 7 | zentrales Kompartiment |
| 8 | elektrische Spannungsquelle |
| 9 | erste elektrische Leitung |
| 10 | zweite elektrische Leitung |
| 11 | Anolyt |
| $11^-$ | Anolyt, der eingespeist wird (anionenarm) |
| $11^+$ | Anolyt, der abgezogen wird (reich an anionen) |
| 12 | Katholyt |
| $12^-$ | Katholyt, der eingespeist wird (lithiumarm) |
| $12^+$ | Katholyt, der abgezogen wird (lithiumreich) |
| 13 | Zentral-Elektrolyt |
| 14 | Anlage |
| 15 | anodischer Kreislauf |
| 16 | kathodischer Kreislauf |
| 17 | gerader Durchgang |
| 18 | Frischwasser (lithiumhaltig) |
| 19 | Abwasser (lithiumarm) |
| 20 | primärer Trennapparat |
| 21 | sekundärer Trennapparat |
| 221 | vollflächige Hilfskathode |
| 222 | verkleinerte Hilfskathode |
| 23 | dritte elektrische Leitung |
| 24 | Zuleitung Zentral-Elektrolyt |
| $X^{n-}$ | Anionen |
| $Me^{m+}$ | kationische Verunreinigungen |
| $OH^-$ | Hydroxidionen |
| $H^+$ | Protonen |
| $Li^+$ | Lithium-Kationen |
| LiOH | Lithiumhydroxid |
| $H_2$ | Wasserstoff |
| $O_2$ | Sauerstoff |
| $H_2O$ | Wasser |

**Patentansprüche**

1.  Verfahren zum Betrieb einer elektrochemischen Zelle (0), umfassend die folgenden, nicht chronologischen Schritte:

    a) Bereitstellen mindestens der elektrochemischen Zelle (0), welche zumindest die folgenden Merkmale aufweist:

    i) die elektrochemische Zelle (0) umfasst eine Anode (1) und eine Kathode (2);
    ii) die elektrochemische Zelle (0) umfasst einen Kathoden-Separator (4) und einen Anoden-Separator (3);
    iii) die elektrochemische Zelle (0) umfasst ein anodisches Kompartiment (5), ein zentrales Kompartiment (7) und ein kathodisches Kompartiment (6);
    iv) der Kathoden-Separator (4) trennt das zentrale Kompartiment (7) von dem kathodischen Kompartiment (6);

v) der Anoden-Separator (3) trennt das zentrale Kompartiment (7) von dem anodischen Kompartiment (5);

vi) der Kathoden-Separator (4) enthält ein anorganisches Material, welches eine Leitfähigkeit für Anionen ($X^{n-}$) sowie eine Leitfähigkeit für Kationen ($Li^+$, $Me^{m+}$) besitzt, wobei die Leitfähigkeit für Kationen ($Li^+$, $Me^{m+}$) größer ist als die Leitfähigkeit für Anionen ($X^{n-}$) und wobei die Leitfähigkeit für Li-Kationen ($Li^+$) größer ist als die Leitfähigkeit für kationische Verunreinigungen ($Me^{m+}$);

vii) der Anoden-Separator (3) enthält ein organisches Material, welches eine Leitfähigkeit für Anionen ($X^{n-}$, $OH^-$) sowie eine Leitfähigkeit für Kationen ($Li^+$, $Me^{m+}$) besitzt, wobei die Leitfähigkeit für Anionen ($X^{n-}$, $OH^-$) größer ist als die Leitfähigkeit für Kationen ($Li^+$, $Me^{m+}$);

viii) das anorganische Material und/oder das organische Material ist elektrisch isolierend;

b) Bereitstellen eines Katholyts (12) im kathodischen Kompartiment (6), wobei der Katholyt (12) mindestens enthält: Wasser ($H_2O$), Li-Kationen ($Li^+$), Hydroxidionen ($OH^-$);

c) Bereitstellen eines Zentral-Elektrolyts (13) im zentralen Kompartiment (7), wobei der Zentral-Elektrolyt (13) mindestens enthält: Wasser ($H_2O$), Li-Kationen ($Li^+$), Anionen ($X^{n-}$) und kationische Verunreinigungen ($Me^{m+}$);

d) Bereitstellen eines Anolyts (11) im anodischen Kompartiment (5), wobei der Anolyt (11) mindestens enthält: Wasser ($H_2O$) und Anionen ($X^{n-}$);

e) Bereitstellen von mindestens einer elektrischen Spannungsquelle (8), welche über eine erste elektrische Leitung (9) mit der Anode (1) und über eine zweite elektrische Leitung (10) mit der Kathode (2) verbindbar ist;

f) Beaufschlagen der elektrochemischen Zelle (0) mit einer von der elektrischen Spannungsquelle (8) bezogenen elektrischen Spannung $U$, dergestalt, dass ein elektrischer Strom $I$ zwischen Anode (1) und Kathode (2) fließt;

**dadurch gekennzeichnet,**

**dass** der Zentral-Elektrolyt (13) zusätzlich auch Hydroxidionen ($OH^-$) enthält, und dass der pH-Wert des Zentral-Elektrolyts (13) zwischen 9 und 12 liegt, gemessen mit einer Glaselektrode bei einer Temperatur von 25°C, und **dass** eine elektrochemische Zelle (0) bereitgestellt wird, welche zusätzlich die folgenden Merkmale aufweist:

ix) die elektrochemische Zelle (0) umfasst eine Hilfskathode (222);

x) die Hilfskathode (222) steht mit dem Zentral-Elektrolyt in Kontakt (13);

xi) die Hilfskathode (222) ist über die zweite elektrische Leitung (10) mit der elektrischen Spannungsquelle (8) verbindbar;

xii) die Kathode (2) weist eine Kathodenfläche $A_K$ auf;

xiii) die Hilfskathode (222) weist eine Hilfskathodenfläche $A_{AK}$ auf;

und **dass** das Verfahren einen Betriebszustand aufweist, nämlich:

k) einen kombinierten Produktions- und Regenerationszustand, in dem die Anode (1) über die erste elektrische Leitung (9) und die Kathode (2) und die Hilfskathode (222) über die zweite elektrische Leitung (10) mit der elektrischen Spannungsquelle (8) verbunden sind und in dem Anode (1) und Kathode (2) und Hilfskathode (222) mit der elektrischen Spannung $U$ beaufschlagt werden, sodass der elektrischer Strom $I$ zwischen Anode (1) und Kathode (2) und Hilfskathode (222) fließt;

wobei die Kathodenfläche $A_K$ und die Hilfskathodenfläche $A_{AK}$ so gewählt sind, dass gilt

$$A_K > f * A_{AK}$$

mit f größer 1 oder mit f größer 10 oder mit f größer 100.

2. Verfahren nach Anspruch 1, **dadurch gekennzeichnet, dass** zumindest ein Teil der Schritte zeitgleich und kontinuierlich erfolgen.

3. Verfahren nach einem der Ansprüche 1 oder 2, **dadurch gekennzeichnet, dass** die Anionen ($X^{n-}$) ausgewählt sind aus der Gruppe bestehend aus Sulfat, Hydrogensulfat, Carbonat, Hydrogencarbonat, Hydroxid, Chlorid, Fluorid.

4. Verfahren nach Anspruch 3, **dadurch gekennzeichnet, dass** die aus besagter Gruppe ausgewählten Anionen ($X^{n-}$) im Zentral-Elektrolyt (13) höher konzentriert sind als Hydroxidionen ($OH^-$).

5. Verfahren nach einem der Ansprüche 1 bis 4, **dadurch gekennzeichnet, dass** es sich bei den kationischen Verunreinigungen ($Me^{m+}$) um Kationen von Elementen handelt, die ausgewählt sind aus der Gruppe bestehend aus B, Na, Mg, Al, Si, K, Ca, Mn, Fe, Co, Ni, Cu, C.

6. Verfahren nach einem der vorhergehenden Ansprüche, wobei das in dem Kathoden-Separator (4) enthaltene anorganische Material eine nach der hier beschriebenen Methode "Impedanz Spektroskopie" gemessene, spezifische Leitfähigkeit für Li-Kationen s besitzt, die bei einer Temperatur von 23°C mindestens $1*10^{-5}$ S/cm oder mindestens $5*10^{-5}$ S/cm oder mindestens $10*10^{-5}$ S/cm und maximal $100*10^{-5}$ S/cm beträgt.

7. Verfahren nach Anspruch 6, **dadurch gekennzeichnet, dass** es sich bei dem anorganischen Material um eine Verbindung der folgenden Stöchiometrie (LATP) handelt:

$$Li_{1+x}Al_xTi_{2-x}(PO_4)_3$$

worin gilt: $0.1 \leq x \leq 0.3$, wobei bevorzugt gilt x=0.3.

8. Verfahren nach Anspruch 6, **dadurch gekennzeichnet, dass** es sich bei dem anorganischen Material um eine Verbindung der folgenden Stöchiometrie (LATSP) handelt:

$$Li_{1+x+y}Al_xTi_{2-x}Si_yP_{3-y}O_{12}$$

worin gilt: $0.1 \leq x \leq 0.3$ und $0.2 \leq y \leq 0.4$.

9. Verfahren nach Anspruch 6, **dadurch gekennzeichnet, dass** es sich bei dem anorganischen Material um eine Verbindung der folgenden Stöchiometrie (LAGTSP) handelt:

$$Li_{1+x+y}Al_xTi_{2-x}Si_yP_{3-y}O_{12} * nGeO_2$$

worin gilt: $0 \leq x \leq 1$ und $0 \leq y \leq 1$ und $0 \leq n \leq 1$.

10. Verfahren nach Anspruch 6, **dadurch gekennzeichnet, dass** es sich bei dem anorganischen Material um eine Verbindung der folgenden Stöchiometrie (LAGTP) handelt:

$$Li_{1.4}Al_{0.4}(Ge_{1-x}Ti_x)_{1.6}(PO_4)_3$$

worin gilt: $0 \leq x \leq 1$.

11. Verfahren nach Anspruch 6, **dadurch gekennzeichnet, dass** es sich bei dem anorganischen Material um eine Verbindung der folgenden Stöchiometrie (LAGP) handelt:

$$Li_{1+x}Al_xGe_{2-x}(PO_4)_3$$

worin gilt: x=0 oder x=0.2 oder x=0.4.

12. Verfahren nach einem der Ansprüche 1 bis 11, **dadurch gekennzeichnet, dass** es sich bei dem im Anoden-Separator (3) enthaltene, organische Material um ein Polymer handelt, welches einen Backbone aufweist, an dem mindestens eine kationische funktionelle Gruppe gebunden ist.

13. Verfahren nach Anspruch 12, **dadurch gekennzeichnet, dass**, dass es sich bei der kationisch funktionellen Gruppe um ein quarternisiertes Trialkyl-Ammoniumsalz handelt.

14. Verfahren nach Anspruch 12 oder 13, **dadurch gekennzeichnet, dass** der Backbone ausgewählt ist aus der Gruppe bestehend aus Polystyrol, Polysulfon, Poly(ethersulfon) oder Poly(phenylenoxid), Polyvinylidenfluorid, oder Polytetrafluorethylen.

15. Verfahren nach Anspruch 12, **dadurch gekennzeichnet, dass**, dass es sich bei der kationisch funktionellen Gruppe um ein quaternisiertes Trialkyl-Ammoniumsalz handelt, dass der Backbone ausgewählt ist aus der Gruppe bestehend aus Polystyrol, Polysulfon, Poly(ethersulfon) oder Poly(phenylenoxid), und dass das quaterinisierte Trialkyl-Ammoniumsalz über eine Benyl(Methyl)-Gruppe an dem Backbone angebunden ist.

16. Verfahren nach Anspruch 1, **dadurch gekennzeichnet, dass** das Verfahren zwei Betriebszustände aufweist, nämlich:

k) den kombinierten Produktions- und Regenerationszustand (k),

p) einen Produktionszustand (p), in dem die Anode (1) und die Kathode (2) über die erste bzw. die zweite elektrische Leitung (9 bzw. 10) mit der elektrischen Spannungsquelle (8) verbunden sind und in dem Anode (1) und Kathode (2) mit der elektrischen Spannung $U$ beaufschlagt werden, sodass der elektrischer Strom $I$ zwischen Anode (1) und Kathode (2) fließt;

wobei alternierend zwischen dem Produktionszustand (p) und dem kombinierten Produktionsund Regenerationszustand (k) gewechselt wird, wobei ein einzelner Produktionszustand (p) über eine zeitliche Dauer von $t_P$ durchgeführt wird und wobei ein einzelner kombinierter Produktions- und Regenerationszustand (k) über eine zeitliche Dauer von $t_K$ durchgeführt wird, wobei gilt

$$t_P > g * t_K$$

mit g größer 50 oder mit g größer 500 oder mit g größer 5000.

17. Verfahren nach einem der Ansprüche 1 oder 16, **dadurch gekennzeichnet, dass** die Hilfselektrode (222) außerhalb des zentralen Kompartiments (7) angeordnet ist und/oder dass die Hilfselektrode (222) aus einem textilen Material besteht.

18. Verfahren nach einem der vorhergehenden Ansprüche 1 bis 17, **dadurch gekennzeichnet, dass** der Betrieb eine Elektrolyse von Wasser ($H_2O$) und eine Elektrodialyse von Anionen ($X^{n-}$) umfasst.

19. Verfahren nach Anspruch 18, **dadurch gekennzeichnet, dass** der Betrieb die Synthese von Lithiumhydroxid und/oder Lithiumhydroxidmonohydrat ($LiOH \circ H_2O$) umfasst.

**Claims**

1. Process for operating an electrochemical cell (0), comprising the following, non-chronological steps:

    a) providing at least the electrochemical cell (0) having at least the following features:

        i) the electrochemical cell (0) comprises an anode (1) and a cathode (2);
        ii) the electrochemical cell (0) comprises a cathode separator (4) and an anode separator (3);
        iii) the electrochemical cell (0) comprises an anodic compartment (5), a central compartment (7) and a cathodic compartment (6);
        iv) the cathode separator (4) separates the central compartment (7) from the cathodic compartment (6);
        v) the anode separator (3) separates the central compartment (7) from the anodic compartment (5);
        vi) the cathode separator (4) comprises an inorganic material having a conductivity for anions ($X^{n-}$) and a conductivity for cations ($Li^+$, $Me^{m+}$), the conductivity for cations ($Li^+$, $Me^{m+}$) being greater than the conductivity for anions ($X^{n-}$) and the conductivity for Li cations ($Li^+$) being greater than the conductivity for cationic impurities ($Me^{m+}$);
        vii) the anode separator (3) comprises an organic material having a conductivity for anions ($X^{n-}$, $OH^-$) and a conductivity for cations ($Li^+$, $Me^{m+}$), the conductivity for anions ($X^{n-}$, $OH^-$) being greater than the conductivity for cations ($Li^+$, $Me^{m+}$);
        viii) the inorganic material and/or the organic material is electrically insulating;

    b) providing a catholyte (12) in the cathodic compartment (6), the catholyte (12) comprising at least: water ($H_2O$), Li cations ($Li^+$), hydroxide ions ($OH^-$);
    c) providing a central electrolyte (13) in the central compartment (7), the central electrolyte (13) comprising at least: water ($H_2O$), Li cations ($Li^+$), anions ($X^{n-}$) and cationic impurities ($Me^{m+}$);
    d) providing an anolyte (11) in the anodic compartment (5), the anolyte (11) comprising at least: water ($H_2O$) and anions ($X^{n-}$);
    e) providing at least one electrical voltage source (8) which can be connected to the anode (1) via a first electrical lead (9) and to the cathode (2) via a second electrical lead (10);
    f) applying an electrical voltage U obtained from the electrical voltage source (8) to the electrochemical cell (0) such that an electrical current I flows between the anode (1) and cathode (2);

    **characterized**

**in that** the central electrolyte (13) additionally also comprises hydroxide ions (OH⁻), and in that the pH of the central electrolyte (13) is between 9 and 12, measured using a glass electrode at a temperature of 25°C, and **in that** an electrochemical cell (0) additionally having the following features is provided:

ix) the electrochemical cell (0) comprises an auxiliary cathode (222);

x) the auxiliary cathode (222) is in contact with the central electrolyte (13);

xi) the auxiliary cathode (222) can be connected to the electrical voltage source (8) via the second electrical lead (10);

xii) the cathode (2) has a cathode area $A_K$;

xiii) the auxiliary cathode (222) has an auxiliary cathode area $A_{AK}$;

and **in that** the process has one operating state, namely:

k) a combined production and regeneration state in which the anode (1) is connected to the electrical voltage source (8) via the first electrical lead (9) and the cathode (2) and the auxiliary cathode (222) are connected to the electrical voltage source (8) via the second electrical lead (10) and in which the electrical voltage $U$ is applied to the anode (1) and cathode (2) and auxiliary cathode (222) so that the electrical current $I$ flows between the anode (1) and cathode (2) and auxiliary cathode (222);

where the cathode area $A_K$ and the auxiliary cathode area $A_{AK}$ are selected such that

$$A_K > f * A_{AK}$$

where f is greater than 1 or where f is greater than 10 or where f is greater than 100.

2. Process according to Claim 1, **characterized in that** at least some of the steps are performed simultaneously and continuously.

3. Process according to either of Claims 1 and 2, **characterized in that** the anions ($X^{n-}$) are selected from the group consisting of sulfate, hydrogensulfate, carbonate, hydrogencarbonate, hydroxide, chloride and fluoride.

4. Process according to Claim 3, **characterized in that** the central electrolyte (13) has a higher concentration of the anions ($X^{n-}$) selected from said group than hydroxide ions (OH⁻).

5. Process according to any of Claims 1 to 4, **characterized in that** the cationic impurities ($Me^{m+}$) are cations of elements selected from the group consisting of B, Na, Mg, Al, Si, K, Ca, Mn, Fe, Co, Ni, Cu and C.

6. Process according to any of the preceding claims, where the inorganic material present in the cathode separator (4) has a specific conductivity for Li ions s, measured by the "impedance spectroscopy" method described herein, that at a temperature of 23°C is at least $1*10^{-5}$ S/cm or at least $5*10^{-5}$ S/cm or at least $10*10^{-5}$ S/cm and at most $100*10^{-5}$ S/cm.

7. Process according to Claim 6, **characterized in that** the inorganic material is a compound of the following stoichiometry (LATP):

$$Li_{1+x}Al_xTi_{2-x}(PO_4)_3$$

in which: $0.1 \leq x \leq 0.3$, where preferably x = 0.3.

8. Process according to Claim 6, **characterized in that** the inorganic material is a compound of the following stoichiometry (LATSP):

$$Li_{1+x+y}Al_xTi_{2-x}Si_yP_{3-y}O_{12}$$

in which: $0.1 \leq x \leq 0.3$ and $0.2 \leq y \leq 0.4$.

9. Process according to Claim 6, **characterized in that** the inorganic material is a compound of the following stoichiometry (LAGTSP):

$$Li_{1+x+y}Al_xTi_{2-x}SiyP_{3-y}O_{12} * nGeO_2$$

in which: $0 \leq x \leq 1$ and $0 \leq y \leq 1$ and $0 \leq n \leq 1$.

10. Process according to Claim 6, **characterized in that** the inorganic material is a compound of the following stoichiometry (LAGTP):

$$Li_{1.4}Al_{0.4}(Ge_{1-x}Ti_x)_{1.6}(PO_4)_3$$

in which: $0 \leq x \leq 1$.

11. Process according to Claim 6, **characterized in that** the inorganic material is a compound of the following stoichiometry (LAGP):

$$Li_{1+x}Al_xGe_{2-x}(PO_4)_3$$

in which: $x = 0$ or $x = 0.2$ or $x = 0.4$.

12. Process according to any of Claims 1 to 11, **characterized in that** the organic material present in the anode separator (3) is a polymer having a backbone to which at least one cationic functional group is bonded.

13. Process according to Claim 12, **characterized in that** the cationic functional group is a quaternized trialkylammonium salt.

14. Process according to Claim 12 or 13, **characterized in that** the backbone is selected from the group consisting of polystyrene, polysulfone, poly(ethersulfone) or poly(phenylene oxide), polyvinylidene fluoride, or polytetrafluoroethylene.

15. Process according to Claim 12, **characterized in that** the cationic functional group is a quaternized trialkylammonium salt, **in that** the backbone is selected from the group consisting of polystyrene, polysulfone, poly(ethersulfone) or poly(phenylene oxide), and **in that** the quaternized trialkylammonium salt is attached to the backbone via a benzyl(methyl) group.

16. Process according to Claim 1, **characterized in that** the process has two operating states, namely:

k) the combined production and regeneration state (k),
p) a production state (p) in which the anode (1) and the cathode (2) are connected to the electrical voltage source (8) via the first and the second electrical lead (9 and 10), respectively, and in which the electrical voltage U is applied to the anode (1) and cathode (2) so that the electrical current I flows between the anode (1) and cathode (2);

there being an alternating change between the production state (p) and the combined production and regeneration state (k), where an individual production state (p) is carried out over a duration of $t_P$ and where an individual combined production and regeneration state (k) is carried out over a duration of $t_K$, where

$$t_P > g \cdot t_K$$

where g is greater than 50 or where g is greater than 500 or where g is greater than 5000.

17. Process according to either of Claims 1 and 16, **characterized in that** the auxiliary electrode (222) is arranged outside the central compartment (7) and/or **in that** the auxiliary electrode (222) consists of a textile material.

18. Process according to any of the preceding Claims 1 to 17, **characterized in that** the operation involves an electrolysis of water ($H_2O$) and an electrodialysis of anions ($X^{n-}$).

19. Process according to Claim 18, **characterized in that** the operation involves the synthesis of lithium hydroxide and/or lithium hydroxide monohydrate ($LiOH \circ H_2O$).

**Revendications**

1. Procédé de fonctionnement d'une cellule électrochimique (0), comprenant les étapes non chronologiques suivantes :

a) la mise à disposition d'au moins la cellule électrochimique (0), laquelle présente au moins les caractéristiques suivantes :

    i) la cellule électrochimique (0) comprend une anode (1) et une cathode (2) ;
    ii) la cellule électrochimique (0) comprend un séparateur de cathode (4) et un séparateur d'anode (3) ;
    iii) la cellule électrochimique (0) comprend un compartiment anodique (5), un compartiment central (7) et un compartiment cathodique (6) ;
    iv) le séparateur de cathode (4) sépare le compartiment central (7) du compartiment cathodique (6) ;
    v) le séparateur d'anode (3) sépare le compartiment central (7) du compartiment anodique (5) ;
    vi) le séparateur de cathode (4) contient une matière inorganique qui présente une conductivité pour les anions ($X^{n-}$) ainsi qu'une conductivité pour les cations ($Li^+$ , $Me^{m+}$), la conductivité pour les cations ($Li^+$ , $Me^{m+}$) étant supérieure à la conductivité pour les anions ($X^{n-}$) et la conductivité pour les cations Li ($Li^+$) étant supérieure à la conductivité pour les impuretés cationiques ($Me^{m+}$) ;
    vii) le séparateur d'anode (3) contient une matière organique qui présente une conductivité pour les anions ($X^{n-}$, $OH^-$) ainsi qu'une conductivité pour les cations ($Li^+$ , $Me^{m+}$), la conductivité pour les anions ($X^{n-}$ , $OH^-$) étant supérieure à la conductivité pour les cations ($Li^+$ , $Me^{m+}$);
    viii) la matière inorganique et/ou la matière organique est électriquement isolante ;

b) la mise à disposition d'un catholyte (12) dans le compartiment cathodique (6), le catholyte (12) contenant au moins : de l'eau ($H_2O$), des cations Li ($Li^+$), des ions hydroxydes ($OH^-$) ;
c) la mise à disposition d'un électrolyte central (13) dans le compartiment central (7), l'électrolyte central (13) contenant au moins : de l'eau ($H_2O$), des cations Li ($Li^+$), des anions ($X^{n-}$) et des impuretés cationiques ($Me^{m+}$) ;
d) la mise à disposition d'un anolyte (11) dans le compartiment anodique (5), l'anolyte (11) contenant au moins : de l'eau ($H_2O$) et des anions ($X^{n-}$) ;
e) la mise à disposition d'au moins une source de tension électrique (8), laquelle peut être reliée à l'anode (1) par une première ligne électrique (9) et à la cathode (2) par une seconde ligne électrique (10) ;
f) l'application à la cellule électrochimique (0) d'une tension électrique U provenant de la source de tension électrique (8), de telle sorte qu'un courant électrique / circule entre l'anode (1) et la cathode (2) ;

**caractérisé**

**en ce que** l'électrolyte central (13) contient en outre des ions hydroxydes ($OH^-$), et en ce que le pH de l'électrolyte central (13), mesuré avec une électrode de verre à une température de 25°C, se situe entre 9 et 12, et en ce qu'une cellule électrochimique (0) est mise à disposition, laquelle présente en outre les caractéristiques suivantes :

    ix) la cellule électrochimique (0) comprend une cathode auxiliaire (222) ;
    x) la cathode auxiliaire (222) est en contact avec l'électrolyte central (13) ;
    xi) la cathode auxiliaire (222) peut être reliée à la source de tension électrique (8) par la seconde ligne électrique (10) ;
    xii) la cathode (2) présente une surface de cathode $A_K$ ;
    xiii) la cathode auxiliaire (222) présente une surface de cathode auxiliaire $A_{AK}$ ;

et **en ce que** le procédé présente un état de fonctionnement, à savoir :
k) un état combiné de production et de régénération, dans lequel l'anode (1) est reliée par la première ligne électrique (9) et la cathode (2) et la cathode auxiliaire (222) sont reliées par la seconde ligne électrique (10) à la source de tension électrique (8), et dans lequel la tension électrique U est appliquée à l'anode (1) et à la cathode (2) et à la cathode auxiliaire (222), de sorte que le courant électrique / circule entre l'anode (1) et la cathode (2) et la cathode auxiliaire (222) ;

la surface de cathode $A_K$ et la surface de cathode auxiliaire $A_{AK}$ étant choisies de telle sorte qu'il s'applique que

$$A_K > f * A_{AK}$$

avec f supérieur à 1 ou f supérieur à 10 ou f supérieur à 100.

2. Procédé selon la revendication 1, **caractérisé en ce qu'**au moins une partie des étapes s'effectue simultanément et en continu.

3. Procédé selon l'une quelconque des revendications 1 ou 2, **caractérisé en ce que** les anions ($X^{n-}$) sont choisis dans le groupe constitué par les anions sulfate, carbonate, hydroxyde, chlorure, fluorure.

4. Procédé selon la revendication 3, **caractérisé en ce que** les anions ($X^{n-}$) choisis dans ledit groupe sont plus fortement concentrés dans l'électrolyte central (13) que les ions hydroxyde ($OH^-$).

5. Procédé selon l'une quelconque des revendications 1 à 4, **caractérisé en ce que** les impuretés cationiques ($Me^{m+}$) sont des cations d'éléments qui sont choisis dans le groupe constitué par B, Na, Mg, Al, Si, K, Ca, Mn, Fe, Co, Ni, Cu, C.

6. Procédé selon l'une quelconque des revendications précédentes, dans lequel la matière inorganique contenue dans le séparateur de cathode (4) possède une conductivité spécifique s pour les cations Li, mesurée selon la méthode « spectroscopie d'impédance » décrite dans le présent document qui, à une température de 23°C, est d'au moins $1*10^{-5}$ S/cm ou d'au moins $5*10^{-5}$ S/cm ou d'au moins $10*10^{-5}$ S/cm et d'au plus $100*10^{-5}$ S/cm.

7. Procédé selon la revendication 6, **caractérisé en ce que** la matière inorganique est un composé présentant la stœchiométrie suivante (LATP) :

$$Li_{1+x}Al_xTi_{2-x}(PO_4)_3$$

dans laquelle il s'applique que : $0,1 \leq x \leq 0,3$, avec de préférence x = 0,3.

8. Procédé selon la revendication 6, **caractérisé en ce que** la matière inorganique est un composé présentant la stœchiométrie suivante (LATSP) :

$$Li_{1+x+y}Al_xTi_{2-x}Si_yP_{3-y}O_{12}$$

dans laquelle il s'applique que : $0,1 \leq x \leq 0,3$ et $0,2 \leq y \leq 0,4$.

9. Procédé selon la revendication 6, **caractérisé en ce que** la matière inorganique est un composé présentant la stœchiométrie suivante (LAGTSP) :

$$Li_{1+x+y}Al_xTi_{2-x}Si_yP_{3-y}O_{12} * nGeO_2$$

dans laquelle il s'applique que : $0 \leq x \leq 1$ et $0 \leq y \leq 1$ et $0 \leq n \leq 1$.

10. Procédé selon la revendication 6, **caractérisé en ce que** la matière inorganique est un composé présentant la stœchiométrie suivante (LAGTP) :

$$\mathbf{Li_{1,4}Al_{0,4}(Ge_{1-x}Ti_x)_{1,6} (PO_4)_3}$$

dans laquelle il s'applique que : $0 \leq x \leq 1$.

11. Procédé selon la revendication 6, **caractérisé en ce que** la matière inorganique est un composé présentant la stœchiométrie suivante (LAGP) :

$$Li_{1+x}Al_xGe_{2-x} (PO_4)_3$$

dans laquelle il s'applique que : x = 0 ou x = 0,2 ou x = 0,4.

12. Procédé selon l'une quelconque des revendications 1 à 11, **caractérisé en ce que** la matière organique contenue dans le séparateur d'anode (3) est un polymère ayant un squelette auquel est lié au moins un groupe fonctionnel cationique.

13. Procédé selon la revendication 12, **caractérisé en ce que** le groupe fonctionnel cationique est un sel de trialkyl ammonium quaternisé.

**14.** Procédé selon la revendication 12 ou 13, **caractérisé en ce que** le squelette est choisi dans le groupe constitué par le polystyrène, la polysulfone, la poly(éthersulfone) ou le poly(oxyde de phénylène), le fluorure de polyvinylidène ou le polytétrafluoroéthylène.

**15.** Procédé selon la revendication 12, **caractérisé en ce que** le groupe fonctionnel cationique est un sel de trialkyl ammonium quaternisé, **en ce que** le squelette est choisi dans le groupe constitué par le polystyrène, la polysulfone, la poly(éthersulfone) ou le poly(oxyde de phénylène), et **en ce que** le sel de trialkyl ammonium quaternisé est lié au squelette par l'intermédiaire d'un groupe bényl(méthyle).

**16.** Procédé selon la revendication 1, **caractérisé en ce que** le procédé présente deux états de fonctionnement, à savoir :

k) l'état combiné de production et de régénération (k),
p) un état de production (p), dans lequel l'anode (1) et la cathode (2) sont reliées à la source de tension électrique (8) respectivement par la première ou la seconde ligne électrique (9 ou 10), et dans lequel la tension électrique U est appliquée à l'anode (1) et à la cathode (2), de sorte que le courant électrique / circule entre l'anode (1) et la cathode (2) ;

un basculement entre l'état de production (p) et l'état combiné de production et de régénération (k) est effectué en alternance, un seul état de production (p) étant réalisé sur une durée égale à $t_P$ et un seul état combiné de production et de régénération (k) étant réalisé sur une durée égale à $t_K$, dans lequel il s'applique que

$$t_P > g_* \, t_K$$

avec g supérieur à 50 ou g supérieur à 500 ou g supérieur à 5000.

**17.** Procédé selon l'une quelconque des revendications 1 ou 16, **caractérisé en ce que** l'électrode auxiliaire (222) est disposée à l'extérieur du compartiment central (7) et/ou **en ce que** l'électrode auxiliaire (222) est constituée d'un matériau textile.

**18.** Procédé selon l'une quelconque des revendications 1 à 17 précédentes, **caractérisé en ce que** le fonctionnement comprend une électrolyse de l'eau ($H_2O$) et une électrodialyse d'anions ($X^{n-}$).

**19.** Procédé selon la revendication 18, **caractérisé en ce que** le fonctionnement comprend la synthèse d'hydroxyde de lithium et/ou d'hydroxyde de lithium monohydraté ($LiOH \circ H_2O$).

Fig. 1

Fig. 2

Fig. 3

Fig. 4

Fig. 5r

Fig. 5p

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2841623 B1
- WO 2022157624 A1

- WO 2019055730 A1

**In der Beschreibung aufgeführte Nicht-Patentliteratur**

- Lithium and Lithium Compounds. **WIETELMANN, U.** ; **STEINBILD, M.** In Ullmann's Encyclopedia of Industrial Chemistry. 2014
- **PANKAJ K. CHOUBEY et al.** Advance review on the exploitation of the prominent energystorage element Lithium. Part II: From sea water and spent lithium ion batteries (LIBs). *Minerals Engineering*, 2017, vol. 110, 104-121
- **PALAKKATHODI KAMMAMPATA et al.** Cruising in ceramics-discovering new structures for all-solid-state batteries-fundamentals, materials, and performances. *Ionics*, 2018, vol. 24, 639-660
- **YEDUKONDALU MEESALA et al.** Recent Advancements in Li-Ion Conductors for All-Solid-State Li-Ion Batteries. *ACS Energy Lett.*, 2017, vol. 2, 12, 2734-2751

- **SOFIA SAFFIRIO et al.** Li1.4Al0.4Ge0.4Ti1.4(PO4)3 promising NASICON-structured glass-ceramic electrolyte for all-solid-state Li-based batteries: Unravelling the effect of diboron trioxide. *Journal of the European Ceramic Society*, 2022, vol. 42 (3), 1023-1032
- **EONGYU YI et al.** Materials that can replace liquid electrolytes in Li batteries: Superionic conductivities in Li1.7Al0.3Ti1.7Si0.4P2.6O12. Processing combustion synthesized nanopowders to free standing thin films. *Journal of Power Sources*, 2014, vol. 269, 577-588